(19) Europäisches Patentamt
European Patent Office
Office européen des brevets

(11) EP 4 224 589 A1

(12) **EUROPEAN PATENT APPLICATION**
published in accordance with Art. 153(4) EPC

(43) Date of publication:
**09.08.2023 Bulletin 2023/32**

(21) Application number: **22821832.7**

(22) Date of filing: **16.11.2022**

(51) International Patent Classification (IPC):
***H01M 10/0567** (2010.01)* ***H01M 10/0525** (2010.01)*

(52) Cooperative Patent Classification (CPC):
Y02E 60/10

(86) International application number:
**PCT/CN2022/132196**

(87) International publication number:
**WO 2023/116271 (29.06.2023 Gazette 2023/26)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **24.12.2021 CN 202111604228**

(71) Applicant: **Shenzhen Capchem Technology Co., Ltd.**
**Shenzhen, Guangdong 518118 (CN)**

(72) Inventors:
- **DENG, Yonghong**
  **Shenzhen, Guangdong 518118 (CN)**
- **QIAN, Yunxian**
  **Shenzhen, Guangdong 518118 (CN)**
- **HU, Shiguang**
  **Shenzhen, Guangdong 518118 (CN)**
- **SUN, Guiyan**
  **Shenzhen, Guangdong 518118 (CN)**
- **XIANG, Xiaoxia**
  **Shenzhen, Guangdong 518118 (CN)**
- **LIN, Xionggui**
  **Shenzhen, Guangdong 518118 (CN)**
- **CAO, Chaowei**
  **Shenzhen, Guangdong 518118 (CN)**

(74) Representative: **De Arpe Tejero, Manuel**
**Arpe Patentes y Marcas**
**Alcalá, 26, 5ª Planta**
**28014 Madrid (ES)**

(54) **SECONDARY BATTERY**

(57) In order to overcome the problem of insufficient high-temperature storage performance of existing batteries containing silicon-based materials, the present application provides a secondary battery, including a positive electrode, a negative electrode with a negative electrode material layer, and a non-aqueous electrolyte, the negative electrode material layer comprises a negative electrode active material, and the negative electrode active material comprises a silicon-based material;
the non-aqueous electrolyte comprises a solvent, an electrolyte salt and an additive, the additives comprises a compound represented by structural formula 1;

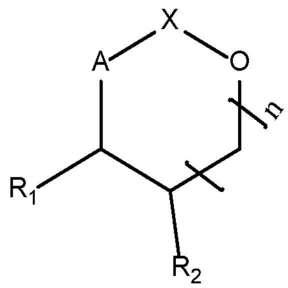

Structural formula 1

wherein n is 0 or 1, A is selected from C or O, X is selected from

EP 4 224 589 A1

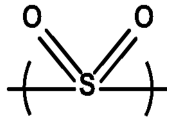

or

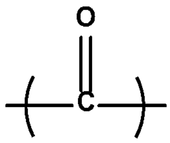,

$R_1$ and $R_2$ are each independently selected from H,

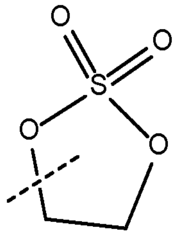, 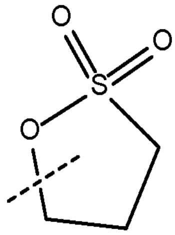,

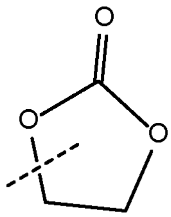, 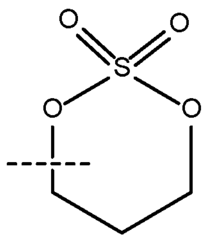 or 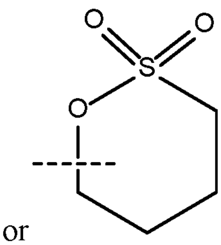,

$R_1$ and $R_2$ are not selected from H at the same time, and X, $R_1$ and $R_2$ comprise at least one sulfur atom;
the secondary battery meets the following requirements:

$$0.21 \le \frac{m*n*r}{S} \le 40;$$

and 40%≤m≤90%, 0.05%≤n≤2%, 1.2g/cm$^3$≤r≤1.8g/cm$^3$, 5%≤S≤30%. The secondary battery provided by the present application can improve the high-temperature storage performance of battery on the premise of ensuring that the battery has excellent energy density.

## Description

### Technical field

The present application belongs to the technical field of energy storage battery devices, and particularly relates to a secondary battery.

### Background

At present, lithium ion batteries have been widely used in 3C digital devices and new energy power vehicles because of their advantages of high energy density, long cycle life and environmental protection, etc. However, the end users in the power field still have urgent requirements for the improvement of cruising range, so further improving the energy density of power batteries is an urgent problem to be solved in the field of lithium ion batteries.

Among the common negative electrode materials in the lithium ion battery market, silicon negative electrode materials have become an important direction to improve the energy density of lithium ion batteries because of their theoretical specific capacity, which is much higher than that of graphite negative electrode material (silicon: 4200 mAh/g, graphite: 372 mAh/g). According to the charging and discharging principle of silicon-based negative electrode, the alloying of silicon and lithium in the charging state leads to serious volume expansion of the negative electrode, which may reach up to 300%, and then leads to the destruction of the solid electrolyte interface film on the negative electrode surface. Then, the solvent and additive in the electrolyte combine with active lithium ions to form a new interface film again. Therefore, the high-temperature storage performance of battery with negative electrode containing silicon has always been one of the problems of this system.

### Summary

Aiming at the problem of insufficient high-temperature storage performance of existing batteries containing silicon-based materials, the present application provides a secondary battery.

The technical solutions adopted by the present application to solve the technical problem are as follows.

The present application provides a secondary battery, including a positive electrode, a negative electrode with a negative electrode material layer, and a non-aqueous electrolyte, the negative electrode material layer includes a negative electrode active material, and the negative electrode active material includes a silicon-based material;

the non-aqueous electrolyte includes a solvent, an electrolyte salt and an additive, the additives includes a compound represented by structural formula 1;

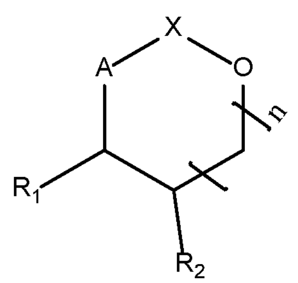

Structural formula 1

wherein n is 0 or 1, A is selected from C or O, X is selected from

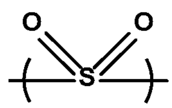

or

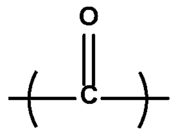,

$R_1$ and $R_2$ are each independently selected from H,

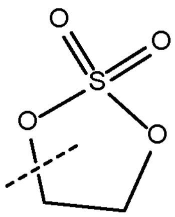, 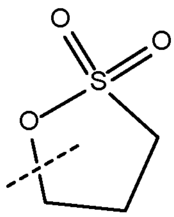,

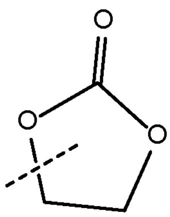, 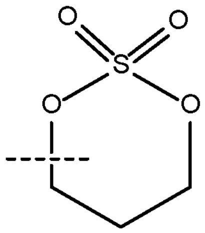 or 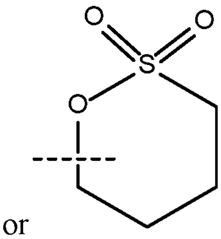,

$R_1$ and $R_2$ are not selected from H at the same time, and X, $R_1$ and $R_2$ include at least one sulfur atom;

the secondary battery meets the following requirements:

$$0.21 \leq \frac{m*n*r}{S} \leq 40$$;

and 40%^m^90%, 0.05%^n^2%, 1.2g/cm$^3$≤r≤ 1.8g/cm$^3$, 5%≤S≤30%;

wherein, m is a mass percentage of the non-aqueous electrolyte to the negative electrode material layer, and the unit is %;

n is a percentage mass content of the compound represented by structural formula 1 in the non-aqueous electrolyte, and the unit is %;

r is a compacted density of the negative electrode material layer, and the unit is g/cm$^3$;

S is a percentage mass content of silicon in the negative electrode material layer, and the unit is %.

Optionally, the secondary battery meets the following requirements:

$$0.4 \leq \frac{m*n*r}{S} \leq 15$$.

Optionally, the percentage mass content (m) of the negative electrode material layer in the non-aqueous electrolyte is 45%-80%.

Optionally, the percentage mass content (n) of the compound represented by structural formula 1 in the non-aqueous electrolyte is 0.05%-1%.

Optionally, the compacted density (r) of the negative electrode material layer is 1.4-1.7 g/cm$^3$.

Optionally, the percentage mass content (S) of silicon in the negative electrode material layer is 5%-20%.

Optionally, the compound represented by structural formula 1 is selected from one or more of the following compounds 1-18:

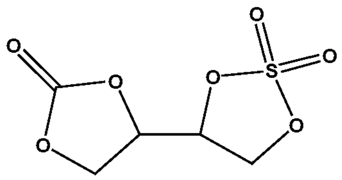

Compound 1

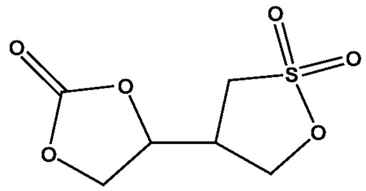

Compound 2

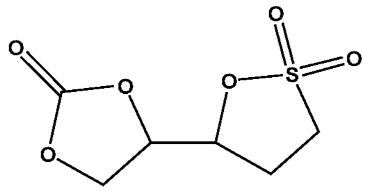

Compound 3

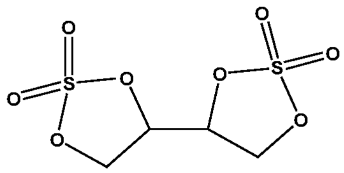

Compound 4

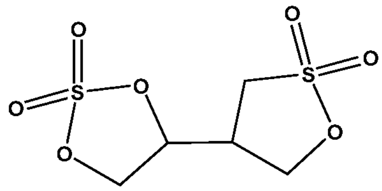

Compound 5

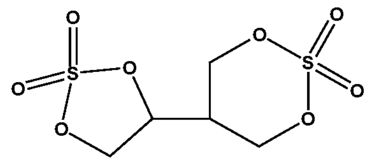

Compound 6

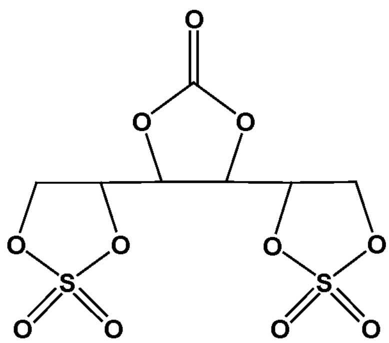

Compound 7

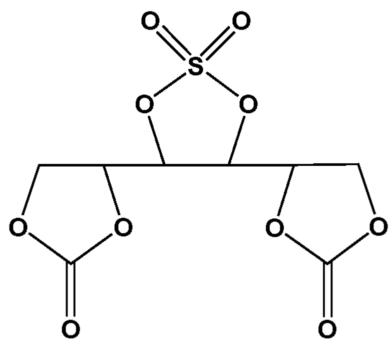

Compound 8

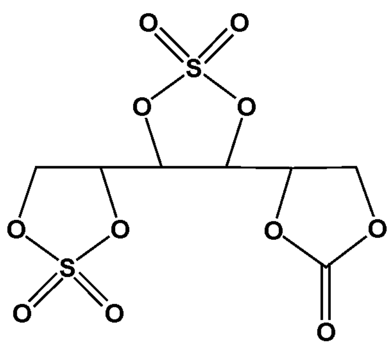

Compound 9

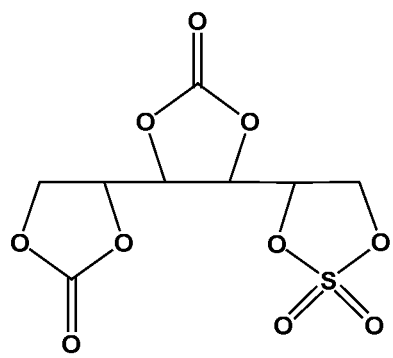

Compound 10

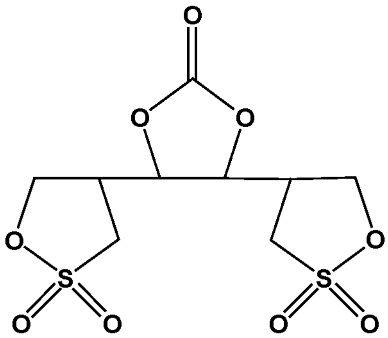

Compound 11

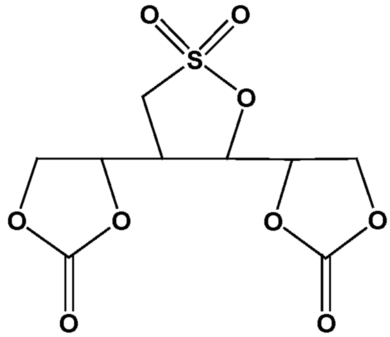

Compound 12

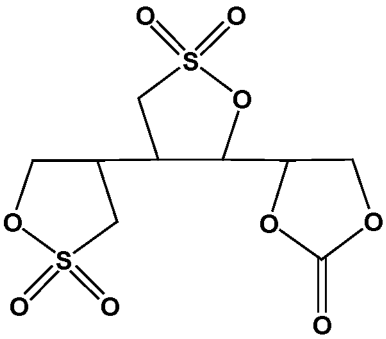

Compound 13

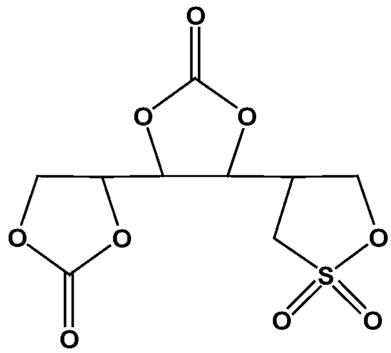

Compound 14

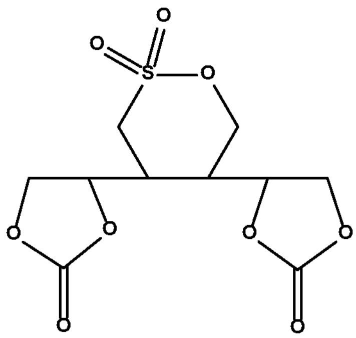

Compound 15

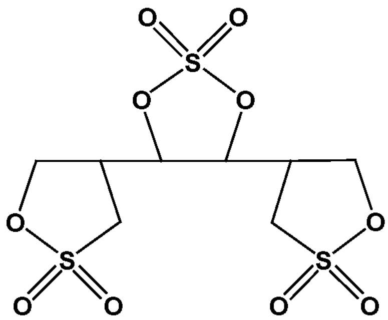

Compound 16

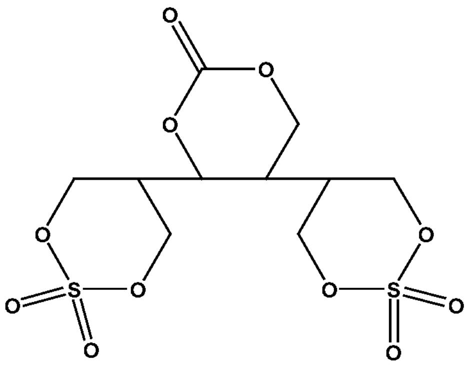

Compound 17

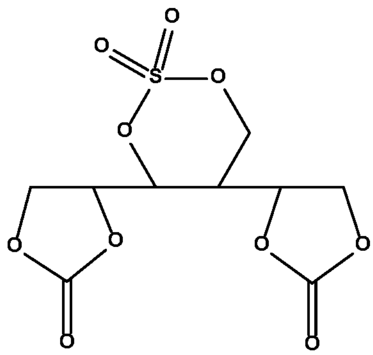

Compound 18

Optionally, the silicon-based material is selected from at least one of silicon material, oxide of silicon, silicon-carbon composite material and silicon alloy material.

Optionally, the non-aqueous electrolyte further includes a supplemental additive, and the supplemental additive include at least one of cyclic sulfate compound, sultone compound, cyclic carbonate compound, phosphate compound, borate compound and nitrile compound.

Optionally, an addition amount of the supplemental additive is 0.01%-30% based on the total mass of the non-aqueous electrolyte being 100%.

Optionally, the cyclic sulfate compound is selected from at least one of ethylene sulfate, propylene sulfate or methyl ethylene sulfate;

the sultone compound is selected from at least one of methylene methyl disulfonate, 1,3-propane sultone, 1,4-butane sultone or 1,3- propene sultone;

the cyclic carbonate compound is selected from at least one of vinylene carbonate, vinylethylene carbonate, fluoroethylene carbonate or a compound represented by structural formula 2;

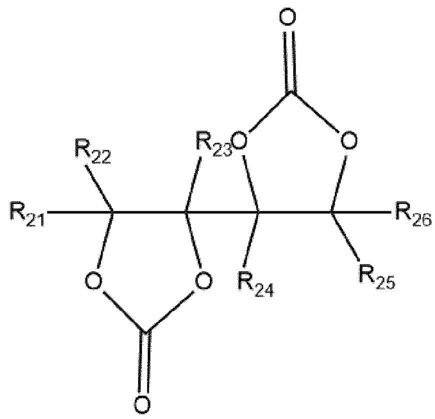

Structural formula 2

in structural formula 2, $R_{21}$, $R_{22}$, $R_{23}$, $R_{24}$, $R_{25}$ and $R_{26}$ are each independently selected from one of a hydrogen atom, a halogen atom and a C1-C5 group;

the phosphate compound is selected from at least one of tris (trimethylsilane) phosphate and a compound represented by structural formula 3:

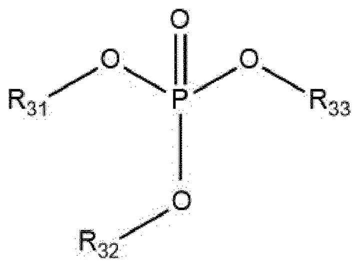

Structural formula 3

in structural formula 3, $R_{31}$, $R_{32}$ and $R_{33}$ are each independently selected from a C1-C5 saturated hydrocarbon group, an unsaturated hydrocarbon group, a halogenated hydrocarbon group and $-Si(C_mH_{2m+1})_3$, m is a natural number of 1-3, and at least one of $R_{31}$, $R_{32}$ and $R_{33}$ is an unsaturated hydrocarbon group;

the borate compound is selected from tris (trimethylsilane) borate; and

the nitrile compound is selected from one or more of butanedinitrile, glutaronitrile, ethylene glycol bis (propionitrile) ether, hexanetricarbonitrile, adiponitrile, pimelic dinitrile, hexamethylene dicyanide, azelaic dinitrile and sebaconitrile.

According to the secondary battery provided by the present application, the additive with a specific structure (the compound represented by structural formula 1) is added into the battery containing a silicon negative electrode. Because the compound represented by structural formula 1 has a high reduction potential, the additive will be reduced and decomposed at the negative electrode before the solvent in the formation process to form a solid electrolyte interface film (SEI), and the formed interface film also contains element S. The sulfate lithium salt ($ROSO_3Li$) formed by the compound represented by structural formula 1 at the negative electrode interface, instead of carbonate lithium salt ($ROCO_2Li$), is the main component of the SEI film, and has a good cooperation relationship with silicon-based material, thus the impedance increase and $CO_2$ gas generation caused by side reactions are avoided during high-temperature storage, and the high-temperature storage performance is effectively improved. Based on the cooperation relationship between the compound represented by structural formula 1 and silicon-based material, after a lot of research, the inventor found that when the mass percentage (m) of the non-aqueous electrolyte to the negative electrode material layer, the percentage mass content (n) of the compound represented by structural formula 1 in the non-aqueous electrolyte, the compacted density (r) of the negative electrode material layer, and the percentage mass content (S) of silicon in the negative electrode material layer satisfy the relational expression: $0.21 \le \frac{m*n*r}{S} \le 40$, the high-temperature storage performance of battery would be improved on the premise of ensuring the excellent energy density of battery.

**Detailed description of disclosed embodiments**

In order to make the technical problems to be solved, technical solutions and beneficial effects of the present application more clear, the present application will be further described in detail below with embodiments. It should be understood that the specific embodiments described herein are for the purpose of illustrating the application only, and not intended to limit the application.

The embodiments of the present application provide a secondary battery, including a positive electrode, a negative electrode with a negative electrode material layer, and a non-aqueous electrolyte, the negative electrode material layer includes a negative electrode active material, and the negative electrode active material includes a silicon-based material;

the non-aqueous electrolyte includes a solvent, an electrolyte salt and an additive, the additives includes a compound represented by structural formula 1;

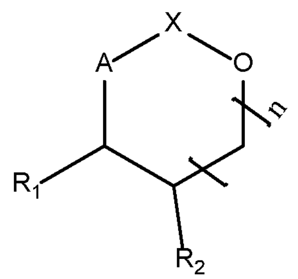

Structural formula 1

wherein n is 0 or 1, A is selected from C or O, X is selected from

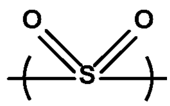

or

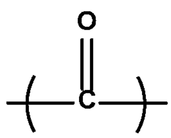

,

$R_1$ and $R_2$ are each independently selected from H,

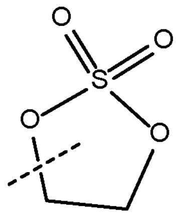 , 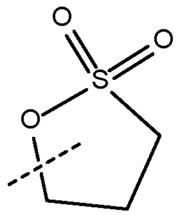 ,

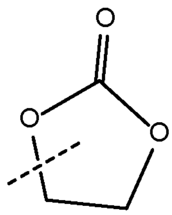 , 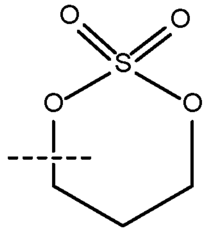 or 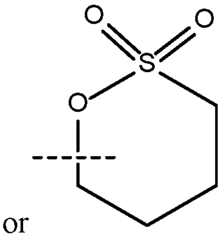 ,

$R_1$ and $R_2$ are not selected from H at the same time, and X, $R_1$ and $R_2$ include at least one sulfur atom;

the secondary battery meets the following requirements:

$$0.21 \leq \frac{m*n*r}{S} \leq 40;$$

and 40%^m^90%, 0.05%^n^2%, 1.2g/cm$^3$≤r≤ 1.8g/cm$^3$, 5%≤S≤30%;

wherein, m is a mass percentage of the non-aqueous electrolyte to the negative electrode material layer, and the unit is %;

n is a percentage mass content of the compound represented by structural formula 1 in the non-aqueous electrolyte, and the unit is %;

r is a compacted density of the negative electrode material layer, and the unit is g/cm$^3$; and

S is a percentage mass content of silicon in the negative electrode material layer, and the unit is %.

Because the compound represented by structural formula 1 has a high reduction potential, the additive will be reduced and decomposed at the negative electrode before the solvent in the formation process to form a solid electrolyte interface film (SEI), and the formed interface film also contains element S. The sulfate lithium salt ($ROSO_3Li$) formed by the compound represented by structural formula 1 at the negative electrode interface, instead of carbonate lithium salt ($ROCO_2Li$), is the main component of the SEI film, and has a good cooperation relationship with silicon-based material, thus the impedance increase and $CO_2$ gas generation caused by side reactions are avoided during high-temperature storage, and the high-temperature storage performance is effectively improved. Based on the cooperation relationship between the compound represented by structural formula 1 and silicon-based material, after a lot of research, the inventor found that when the mass percentage (m) of the non-aqueous electrolyte to the negative electrode material layer, the percentage mass content (n) of the compound represented by structural formula 1 in the non-aqueous electrolyte, the compacted density (r) of the negative electrode material layer, and the percentage mass content (S) of silicon in the negative electrode material layer satisfy the relational expression: $0.21 \leq \frac{m*n*r}{S} \leq 40$, the high-temperature storage performance of battery would be improved on the premise of ensuring the excellent energy density of battery.

In a preferred embodiment, the secondary battery meets the following requirements:

$$0.4 \leq \frac{m*n*r}{s} \leq 15$$

With the correlation of the mass percentage (m) of the non-aqueous electrolyte to the negative electrode material layer, the percentage mass content (n) of the compound represented by structural formula 1 in the non-aqueous electrolyte, the compacted density (r) of the negative electrode material layer, and the percentage mass content (S) of silicon in the negative electrode material layer, the effects of the negative electrode of silicon-based material and the non-aqueous electrolyte additive on the battery performances can be combined to some extent, so as to obtain a secondary battery with excellent high-temperature storage performance.

In some embodiments, the mass percentage (m) of the non-aqueous electrolyte to the negative electrode material layer is 40%-90%.

In a preferred embodiment, the mass percentage (m) of the non-aqueous electrolyte to the negative electrode material layer is 45%-80%.

Specifically, the mass percentage (m) of the non-aqueous electrolyte to the negative electrode material layer is 40%, 41%, 43%, 47%, 50%, 51%, 54%, 56%, 59%, 61%, 63%, 64% or 65%.

The compound represented by structural formula 1 is reduced and decomposed on the silicon surface to form an interface film, the content of non-aqueous electrolyte directly affects the liquid injection and liquid retention coefficients of battery, and together with the percentage mass content (n) of the compound represented by structural formula 1 in the non-aqueous electrolyte, determine the total content of the compound represented by structural formula 1 in battery; meanwhile, the mass of negative active material and the percentage mass content (s) of silicon in the negative electrode material layer determine the total content of silicon, therefore, the mass percentage (m) of the non-aqueous electrolyte to the negative electrode material layer is the limiting condition directly related to the battery system. Whether the mass percentage (m) of the non-aqueous electrolyte to the negative electrode material layer is too large or too small, it is not conducive to the interaction between the compound represented by structural formula 1 and silicon-based material.

Specifically, the percentage mass content (n) of the compound represented by structural formula 1 in the non-aqueous electrolyte is 0.05%, 0.09%, 0.1%, 0.2%, 0.4%, 0.8%, 1.1%, 1.5%, 1.7%, 1.9% or 2%.

In a preferred embodiment, the percentage mass content (n) of the compound represented by structural formula 1 in the non-aqueous electrolyte is 0.05%-1%.

The rapid degradation of performance of silicon-based negative electrode material due to the negative electrode volume effect during storage is one of the reasons that inhibit its commercial application. However, when the compound represented by structural formula 1 is used in batteries, the impedance will slightly increase. According to the research and verification of the inventor, when the additive represented by structural formula 1 is applied to a silicon-containing battery, during the battery formation process, the additive would undergo reductive decomposition on the surface of a silicon-based negative electrode to participate in the formation of an SEI film. The sulfate lithium salt ($ROSO_3Li$) contained in the formed interface film replaces most of the carbonate lithium salt ($ROCO_2Li$) and becomes the main organic component. Meanwhile, the S-containing group with electron-withdrawing effect in the interface film are complexed with the element Si in the negative electrode, thus further stabilizing the interface structure. The above interface film composition effectively inhibits the impedance increase and $CO_2$ gas generation caused by side reaction during high temperature storage. Therefore, in the battery system with negative electrode containing silicon, the application of the additive can effectively improve the high-temperature storage performance.

When the percentage mass content (n) of the compound represented by structural formula 1 is too low, it is difficult to form an interface film with enough sulfate lithium salt ($ROSO_3Li$); when the percentage mass content (n) of the compound represented by structural formula 1 is too high, it is easy to generate excessive by-products in the cycle of battery, thus affecting the stability of the non-aqueous electrolyte.

Specifically, the compacted density (r) of the negative electrode material layer is 1.2g/cm$^3$, 1.25g/cm$^3$, 1.3g/cm$^3$, 1.35g/cm$^3$, 1.4g/cm$^3$, 1.45g/cm$^3$, 1.5g/cm$^3$, 1.55g/cm$^3$, 1.6g/cm$^3$, 1.65g/cm$^3$, 1.7g/cm$^3$, 1.75g/cm$^3$ or 1.8g/cm$^3$.

In a preferred embodiment, the compacted density (r) of the negative electrode material layeris 1.4-1.7g/cm$^3$.

The negative electrode material layer has a porous structure, and the charging and discharging process of battery actually involves the liquid phase conduction of ions in the negative electrode material layer, so the richness of pores in the negative electrode material layer will directly affect the fast charging and life performance of battery. Under the same other conditions, the smaller the compacted density of the negative electrode material layer, the more developed its pore structure, and the more favorable it is for the liquid phase conduction of active ions, especially under the harsh condition of repeated charge and discharge expansion of battery. However, if the compacted density is too low, the film and powder of the negative electrode sheet would fall off, and lithium would be precipitated due to poor electronic conductivity during charging, which would affect the fast charging and life performance of battery, and also reduce the energy density of battery. As the negative electrode compacted density would affect the infiltration effect of non-aqueous electrolyte on the negative electrode containing silicon and the volume expansion rate of the negative electrode containing

silicon, the compaction size is also directly related to the performance of the battery system. When the compacted density of the negative electrode material layer is in the above range, the battery has the best performance.

Specifically, the percentage mass content (S) of silicon in the negative electrode material layer is 5%, 7%, 10%, 13%, 15%, 16%, 18%, 21%, 23%, 24%, 26%, 27%, 29% or 30%.

In a preferred embodiment, the percentage mass content (S) of silicon in the negative electrode material layer is 5%-20%.

As the negative electrode active material, silicon-based materials play the role of carrier for lithium ion intercalation and deintercalation. Compared with other negative electrode active materials, such as graphite, silicon-based materials have higher theoretical capacity. When the percentage mass content (S) of silicon in the negative electrode material layer is in the above range, it can effectively improve the battery capacity, and at the same time, it can avoid the problem of excessive volume change during battery cycle caused by excessive silicon content.

The above analysis is merely based on the effects of each parameter or multiple parameters on the battery separately, but in the actual battery application process, the mass of the non-aqueous electrolyte in the battery, the percentage mass content of the compound represented by structural formula 1 in the non-aqueous electrolyte, the proportions of the negative electrode active material mass and silicon, and the compacted density of the negative electrode material layer are related to each other. When the ratio of the mass of electrolyte to the total mass of negative active material is in the range of 40-90%, the content of additive represented by structural formula 1 in electrolyte is 0.05-2%, and it is applied to the battery system with negative electrode silicon content of 5-30%, if the compacted density of the negative electrode of battery is less than 1.2-1.8 g/cm$^3$, and the above parameters satisfy the rational relationship of $0.21 \le \frac{m*n*r}{S} \le 40$, the storage performance of the system would be significantly improved.

In some embodiments, the compound represented by structural formula 1 is selected from one or more of the following compounds 1-18:

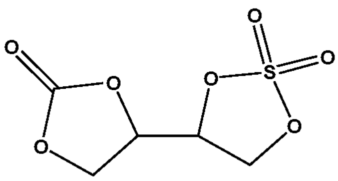

Compound 1

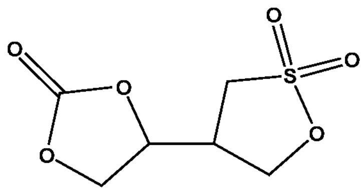

Compound 2

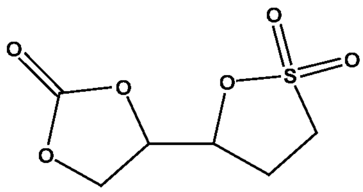

Compound 3

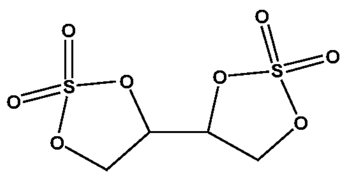

Compound 4

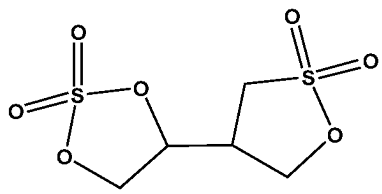

Compound 5

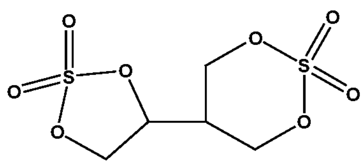

Compound 6

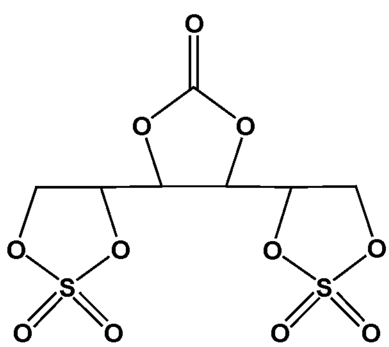

Compound 7

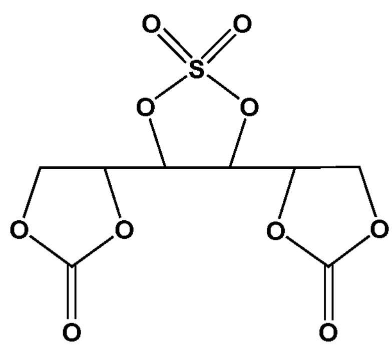

Compound 8

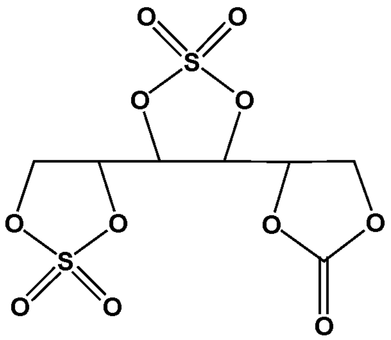

Compound 9

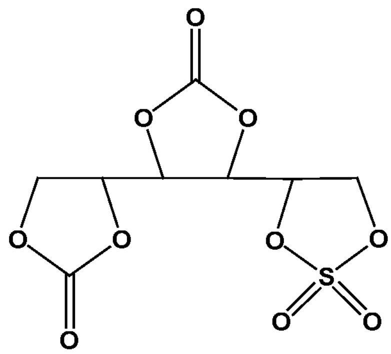

Compound 10

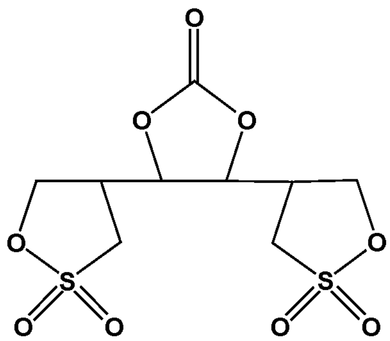

Compound 11

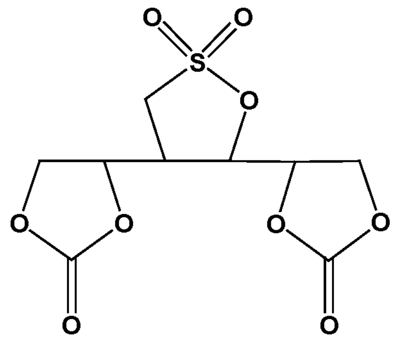

Compound 12

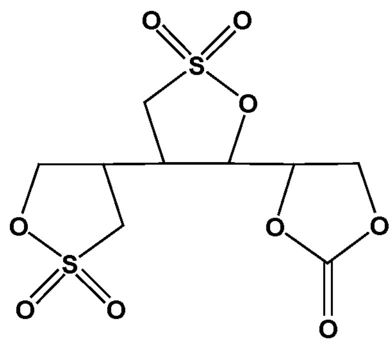

Compound 13

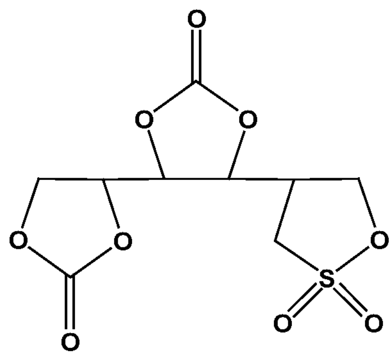

Compound 14

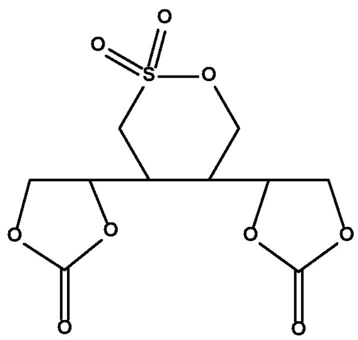

Compound 15

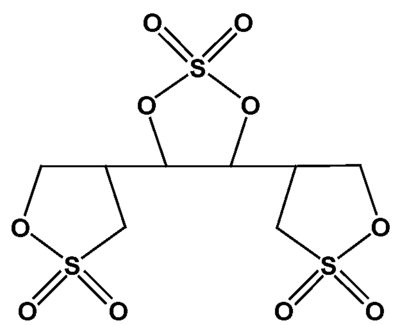

Compound 16

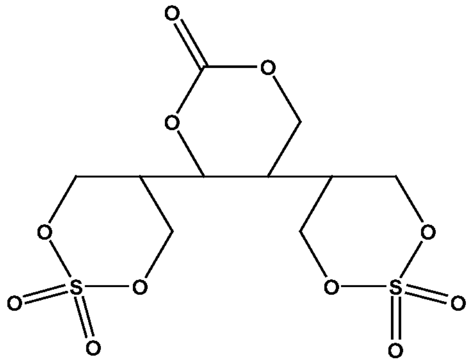

Compound 17

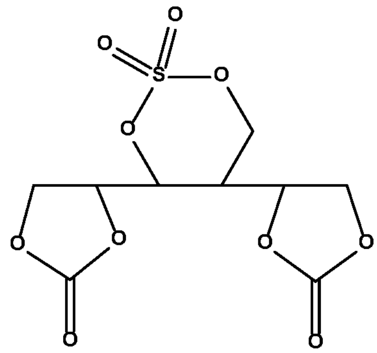

Compound 18

It should be noted that the above are merely the preferred compounds of the present application, not the limitation of the present application.

With the structural formula of the compound represented by structural formula 1, a person skilled in the art may obtain the preparation methods of the above compounds according to the common knowledge in the chemical synthesis field. For example, Compound 7 may be prepared by the following method.

Put organic solvents such as sorbitol, dimethyl carbonate, methanol alkaline catalyst potassium hydroxide and DMF into a reaction container, allow them to react for several hours under heating conditions, add a certain amount of oxalic acid to adjust the pH value to be neutral, then filter and recrystallize to obtain an intermediate product 1, and then perform esterification reaction on the intermediate product 1, carbonate, thionyl chloride and the like under high temperature conditions to obtain an intermediate product 2, and oxidize the intermediate product 2 by using an oxidant such as sodium periodate and the like to obtain a Compound 7.

In some embodiments, the silicon-based material is selected from at least one of silicon material, oxide of silicon, silicon-carbon composite material and silicon alloy material.

The silicon material is one or more of silicon nanoparticle, silicon nanowire, silicon nanotube, silicon film, 3D porous silicon and hollow porous silicon.

In some embodiments, the negative electrode further includes a negative electrode current collector, and the negative electrode material layer covers the surface of the negative electrode current collector. In the present application, the portion of the negative electrode except for the negative electrode current collector is referred to as negative electrode material layer.

The negative electrode current collector is selected from metal materials that can conduct electrons. Preferably, the negative electrode current collector includes one or more of Al, Ni, tin, copper and stainless steel. In a more preferred embodiment, the negative electrode current collector is selected from aluminum foil.

In some embodiments, the negative electrode material layer further includes a negative electrode binder and a negative electrode conductive agent. The negative electrode active material, negative electrode binder and negative electrode conductive agent are mixed to obtain the negative electrode material layer. The negative electrode binder includes one or more of polyvinylidene fluoride, vinylidene fluoride copolymer, polytetrafluoroethylene, vinylidene fluoride-hexafluoropropylene copolymer, tetrafluoroethylene-hexafluoropropylene copolymer, tetrafluoroethylene-perfluoroalkyl vinyl ether copolymer, ethylene-tetrafluoroethylene copolymer, vinylidene fluoride-tetrafluoroethylene copolymer, vinylidene fluoride-trifluoroethylene copolymer, vinylidene fluoride-trichloroethylene copolymer, vinylidene fluoride-fluoroethylene copolymer, vinylidene fluoride-hexafluoropropylene-tetrafluoroethylene copolymer, and thermoplastic resins such as thermoplastic polyimide, polyethylene and polypropylene; acrylic resin; carboxyl methylcellulose sodium; and styrene butadiene rubber.

The negative electrode conductive agent includes one or more of conductive carbon black, conductive carbon sphere, conductive graphite, conductive carbon fiber, carbon nanotube, graphene or reduced graphene oxide.

In some embodiments, the positive electrode includes a positive electrode material layer including a positive electrode active material, and the types of the positive electrode active materials are not particularly limited, and can be selected according to actual requirements, as long as they are positive electrode active materials or conversion positive electrode materials that can reversibly intercalate/deintercalate metal ions (lithium ions, sodium ions, potassium ions, magnesium ions, zinc ions, aluminum ions, etc.).

In a preferred embodiment, the battery is a lithium ion battery, and its positive electrode active material may be selected from one or more of $LiFe_{1-x'}M'_{x'}PO_4$, $LiMn_{2-y'}M_{y'}O_4$ and $LiNi_xCo_yMn_zM_{1-x-y-z}O_2$, in which, M' is selected form one or more of Mn, Mg, Co, Ni, Cu, Zn, Al, Sn, B, Ga, Cr, Sr, V or Ti, M is selected form one or more of Fe, Co, Ni, Mn, Mg, Cu, Zn, Al, Sn, B, Ga, Cr, Sr, V or Ti, and $0 \le x' \le 1$, $0 \le y \le 1$, $0 \le y \le 1$, $0 \le x \le 1$, $0 \le z \le 1$, $x+y+z \le 1$, the positive electrode

active material may also be selected from one or more of sulfide, selenide and halide. More preferably, the positive electrode active material may be selected from one or more of $LiCoO_2$, $LiFePO_4$, $LiFe_{0.8}Mn_{0.2}PO_4$, $LiNi_{0.5}Co_{0.2}Mn_{0.3}O_2$, $LiNi_{0.6}Co_{0.2}Mn_{0.2}O_2$, $LiNi_{0.8}Co_{0.1}Mn_{0.1}O_2$, $LiNi_{0.5}Co_{0.2}Mn_{0.2}Al_{0.1}O_2$, $LiMn_2O_4$ and $LiNi_{0.5}Co_{0.2}Al_{0.3}O_2$.

In a preferred embodiment, the battery is a sodium ion battery, and its positive active material may be selected from one or more of sodium metal, carbon material, alloy material, transition metal oxide, transition metal sulfide, phosphorus-based material, titanate material and Prussian blue material. The carbon material may be selected from one or more of graphite, soft carbon and hard carbon. The alloy material may be an alloy material composed of at least two of Si, Ge, Sn, Pb and Sb, and the alloy material may also be selected from the alloy material composed of (at least one of Si, Ge, Sn, Pb and Sb) and C. The chemical formula of the transition metal oxide and the transition metal sulfide is $M1_xN_y$, and M1 may be selected from one or more of Fe, Co, Ni, Cu, Mn, Sn, Mo, Sb and V N is selected from O or S, the phosphorus-based material may be selected from one or more of red phosphorus, white phosphorus and black phosphorus, the titanate material may be selected from one or more of $Na_2Ti_3O_7$, $Na_2Ti_6O_{13}$, $Na_4Ti_5O_{12}$, $Li_4Ti_5O_{12}$ and $NaTi_2(PO_4)_3$, and the molecular formula of Prussian blue material is $Na_xM[M'(CN)_6]_y \cdot zH_2O$, in which M is a transition metal and M' is a transition metal, $0<x\leq2$, $0.8\leq y<1$, $0<z\leq20$.

In some embodiments, the positive electrode further includes a positive electrode current collector, and the positive electrode material layer covers the surface of the positive electrode current collector. In the present application, the portion of the positive electrode except for the positive electrode current collector is referred to as positive electrode material layer.

The positive electrode current collector may be selected from metal materials that can conduct electrons. Preferably, the positive electrode current collector includes one or more of Al, Ni, tin, copper and stainless steel. In a more preferred embodiment, the positive electrode current collector is selected from aluminum foil.

In some embodiments, the positive electrode material layer further includes a positive electrode binder and a positive electrode conductive agent. The positive electrode active material, positive electrode binder and positive electrode conductive agent are mixed to obtain the positive electrode material layer.

In some embodiments, the positive electrode binder includes one or more of polyvinylidene fluoride, vinylidene fluoride copolymer, polytetrafluoroethylene, vinylidene fluoride-hexafluoropropylene copolymer, tetrafluoroethylene-hexafluoropropylene copolymer, tetrafluoroethylene-perfluoroalkyl vinyl ether copolymer, ethylene-tetrafluoroethylene copolymer, vinylidene fluoride-tetrafluoroethylene copolymer, vinylidene fluoride-trifluoroethylene copolymer, vinylidene fluoride-trichloroethylene copolymer, vinylidene fluoride-fluoroethylene copolymer, vinylidene fluoride-hexafluoropropylene-tetrafluoroethylene copolymer, and thermoplastic resins such as thermoplastic polyimide, polyethylene and polypropylene; acrylic resin; and styrene butadiene rubber.

In some embodiments, the positive electrode conductive agent includes one or more of metal conductive agent, carbon-based material, metal oxide-based conductive agent and composite conductive agent. Specifically, the metal conductive agent may be copper powder, nickel powder, silver powder and other metals. The carbon-based materials may be carbon-based materials such as conductive graphite, conductive carbon black, conductive carbon fiber or graphene. The metal oxide-based conductive agent may be tin oxide, iron oxide, zinc oxide, etc. The composite conductive agent may be composite powder, composite fiber, etc. More specifically, the conductive carbon black may be one or more of acetylene black, 350G, Cochin black, carbon fiber (VGCF) and carbon nanotubes (CNTs).

In some embodiments, the electrolyte salt includes one or more of lithium salt, sodium salt, potassium salt, magnesium salt, zinc salt and aluminum salt. In a preferred embodiment, the electrolyte salt is selected from lithium salt or sodium salt.

In a preferred embodiment, the electrolyte salt is selected from at least one of $LiPF_6$, $LiPO_2F_2$, $LiBF_4$, LiBOB, $LiSbF_6$, $LiAsF_6$, $LiCF_3SO_3$, LiDFOB, $LiN(SO_2CF_3)_2$, $LiC(SO_2CF_3)_3$, $LiN(SO_2C_2F_5)_2$, $LiN(SO_2F)_2$, LiCl, LiBr, LiI, $LiClO_4$, $LiBF_4$, $LiB_{10}Cl_{10}$, $LiAlCl_4$, lithium chloroborane, lithium lower aliphatic carboxylate with 4 or less carbon atoms, Lithium tetraphenylborate and Lithium imino. Specifically, the electrolyte salt may be inorganic electrolyte salts such as $LiBF_4$, $LiClO_4$, $LiAlF_4$, $LiSbF_6$, $LiTaF_6$ and $LiWF_7$; $LiPF_6$ and other fluorophosphoric acid electrolyte salts; $LiWOF_5$ and other tungstic acid electrolyte salts; $HCO_2Li$, $CH_3CO_2Li$, $CH_2FCO_2Li$, $CHF_2CO_2Li$, $CF_3CO_2Li$, $CF_3CH_2CO_2Li$, $CF_3CF_2CO_2Li$, $CF_3CF_2CF_2CO_2Li$, $CF_3CF_2CF_2CF_2CO_2Li$ and other carboxylic acid electrolyte salt; $CH_3SO_3Li$ and other sulfonic acid electrolyte salts; $LiN(FCO_2)_2$, $LiN(FCO)(FSO_2)$, $LiN(FSO_2)_2$, $LiN(FSO_2)(CF_3SO_2)$, $LiN(CF_3SO_2)_2$, $LiN(C_2F_5SO_2)_2$, cyclic lithium 1,2- perfluoroethylene disulphide, cyclic lithium 1,3- perfluoropropane disulphide and other imide electrolyte salts; LiN(CF3SO2)(C4F9SO2); $LiC(FSO_2)_3$, $LiC(CF_3SO_2)_3$, $LiC(C_2F_5SO_2)_3$ and other methyl electrolyte salts; lithium difluorooxalato borate, lithium bis (oxalato) borate, lithium tetrafluorooxalato phosphate, lithium difluoro bis (oxalato) phosphate, and lithium tri (oxalato) phosphate and other oxalic acid electrolyte salts; and $LiPF_4(CF_3)_2$, $LiPF_4(C_2F_5)_2$, $LiPF_4(CF_3SO_2)_2$, $LiPF_4(C_2F_5SO_2)_2$, $LiBF_3CF_3$, $LiBF_3C_2F_5$, $LiBF_3C_3F_7$, $LiBF_2(CF_3)_2$, $LiBF_2(C_2F_5)_2$, $LiBF_2(CF_3SO_2)_2$, $LiBF_2(C_2F_5SO_2)_2$ and other fluorine-containing organic electrolyte salts, etc.

If the electrolyte salt is selected from other salts such as sodium salt, potassium salt, magnesium salt, zinc salt or aluminum salt, the lithium in the lithium salt may be correspondingly replaced with sodium, potassium, magnesium, zinc or aluminum.

In a preferred embodiment, the sodium salt is selected from at least one of sodium perchlorate ($NaClO_4$), sodium hexafluorophosphate ($NaPF_6$), sodium tetrafluoroborate ($NaBF_4$), sodium trifluoromethylsulfonate (NaFSI) and sodium bis-trifluoromethylsulfonate (NaFSI).

Generally, the electrolyte salt in the electrolyte is the transfer unit of lithium ion, and the concentration of electrolyte salt directly affects the transfer rate of lithium ion, which would affect the potential change of negative electrode. During the rapid charging process of battery, it is necessary to improve the mobility speed of lithium ions as much as possible, so as to prevent the formation of lithium dendrites caused by the rapid decrease of negative electrode potential, which may bring potential safety hazards to battery, and meanwhile, prevent the rapid attenuation of the cycle capacity of battery. Preferably, the total concentration of the electrolyte salt in the electrolyte may be 0.5mol/L-2 .0mol/L, 0.5mol/L-0.6mol/L, 0.6mol/L-0.7mol/L, 0.7mol/L-0.8mol/L, 0.8mol/L-0.9mol/L, 0.9mol/L-1.0mol/L, 1.0mol/L-1.lmol/L, 1.1mol/L-1.2mol/L, 1.2mol/L-1.3mol/L, 1.3mol/L-1.4mol/L, 1.4mol/L-1.5mol/L, 1.5mol/L-1.6mol/L, 1.6mol/L-1.7mol/L, 1.7mol/L-1.8mol/L, 1.8mol/L-1.9mol/L, or 1.9mol/L-2 .0mol/L, and more preferably, 0.6mol/L-1.8mol/L, 0.7mol/L-1.7mol/L or 0.8mol/L-1.5mol/L.

In some embodiments, the non-aqueous electrolyte further includes a supplemental additive, and the supplemental additive include at least one of cyclic sulfate compound, sultone compound, cyclic carbonate compound, phosphate compound, borate compound and nitrile compound.

In a preferred embodiment, the cyclic sulfate compound is selected from at least one of ethylene sulfate, propylene sulfate or methyl ethylene sulfate;

the sultone compound is selected from at least one of methylene methyl disulfonate, 1,3-propane sultone, 1,4-butane sultone or 1,3- propene sultone;

the cyclic carbonate compound is selected from at least one of vinylene carbonate, vinylethylene carbonate, fluoroethylene carbonate or a compound represented by structural formula 2;

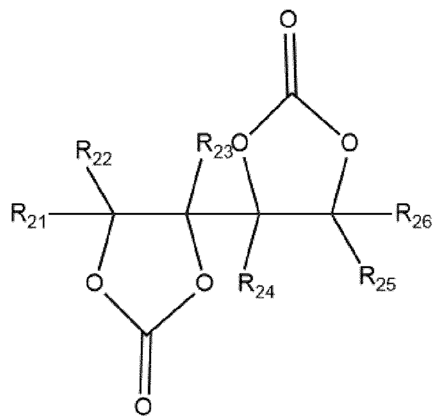

Structural formula 2

in structural formula 2, $R_{21}$, $R_{22}$, $R_{23}$, $R_{24}$, $R_{25}$ and $R_{26}$ are each independently selected from one of a hydrogen atom, a halogen atom and a C1-C5 group;

the phosphate compound is selected from at least one of tris (trimethylsilane) phosphate and a compound represented by structural formula 3;

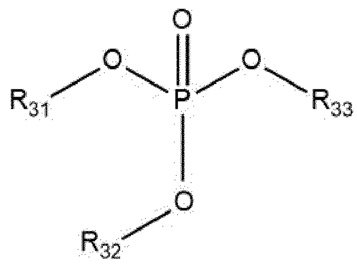

Structural formula 3

in structural formula 3, $R_{31}$, $R_{32}$ and $R_{33}$ are each independently selected from a C1-C5 saturated hydrocarbon group, an unsaturated hydrocarbon group, a halogenated hydrocarbon group and $-Si(C_mH_{2m+1})_3$, m is a natural number of 1-3, and at least one of $R_{31}$, $R_{32}$ and $R_{33}$ is an unsaturated hydrocarbon group;

In a preferred embodiment, the unsaturated phosphate compound may be at least one selected from the group consisting of tris (trimethylsilane) phosphate, trialpropargyl phosphate, diypropargyl methyl phosphate, diypropargyl ethyl phosphate, diypropargyl trifluoromethyl phosphate, diypropargyl-2,2,2-trifluoroethyl phosphate, diypropargyl-3,3,3-trifluoropropyl phosphate, diallyl hexafluoroisopropyl phosphate, triallyl phosphate, diallyl methyl phosphate, diallyl ethyl phosphate, diallyl propyl phosphate, diallyl trifluoromethyl phosphate, diallyl-2,2,2-trifluoroethyl phosphate, diallyl-3,3,3-trifluoropropyl phosphate and diallyl hexafluoroisopropyl phosphate.

The borate compound is selected from tris (trimethylsilane) borate.

The nitrile compound is selected from one or more of butanedinitrile, glutaronitrile, ethylene glycol bis (propionitrile) ether, hexanetricarbonitrile, adiponitrile, pimelic dinitrile, hexamethylene dicyanide, azelaic dinitrile and sebaconitrile.

In other embodiments, the supplemental additive may also include other additives that can improve the performance of the battery. For example, additives that can improve the safety performance of the battery, flame retardant additives such as fluorophosphate and cyclophosphazene, or overcharge prevention additives such as tert.-amylbenzene and tert-butyl benzene.

In some embodiments, an addition amount of the supplemental additive is 0.01%-30% based on the total mass of the non-aqueous electrolyte being 100%.

It should be noted that, unless otherwise specified, in general, the addition amount of any optional substance of the supplemental additives in the non-aqueous electrolyte is below 10%, preferably 0.1-5%, and more preferably 0.1-2%. Specifically, the addition amount of any optional substance of the supplemental additives may be 0.05%, 0.08%, 0.1%, 0.5%, 0.8%, 1%, 1.2%, 1.5%, 1.8%, 2%, 2.2%, 2.5%, 2.8%, 3%, 3.2%, 3.5%, 3.8%, 4%, 4.5%, 5%, 5.5%, 6%, 6.5%, 7%, 7.5%, 7.8%, 8%, 8.5%, 9%, 9.5%, 10%.

In some embodiments, when the supplemental additive is selected from fluoroethylene carbonate, the addition amount of fluoroethylene carbonate is 0.05%-30% based on the total mass of the non-aqueous electrolyte being 100%.

In some embodiments, the solvent includes one or more of ether solvent, nitrile solvent, carbonate solvent and carboxylic acid solvent.

In some embodiments, the ether solvent includes cyclic ether or chain ether, preferably chain ether with 3-10 carbon atoms and cyclic ether with 3-6 carbon atoms, and the specific cyclic ether may be but are not limited to 1,3-dioxolane (DOL), 1,4-dioxooxane (DX), crown ether, tetrahydrofuran (THF), 2-methyltetrahydrofuran (2-$CH_3$-THF) and 2-trifluoromethyltetrahydrofuran (2-$CF_3$-THF). Specifically, the chain ether may be but not limited to dimethoxymethane, diethoxymethane, ethoxymethoxymethane, ethylene glycol di-n-propyl ether, ethylene glycol di-n-butyl ether and diethylene glycol dimethyl ether. Dimethoxymethane, diethoxymethane and ethoxymethoxymethane with low viscosity and high ionic conductivity are particularly preferred because the solvability of chain ether and lithium ions is high and the ion dissociation can be improved. Ether compounds may be used alone or in any combinations and ratios of two or more kinds. The addition amount of ether compound is not particularly limited, which is within the range of not significantly damaging the effect of the high-voltage lithium ion battery of the present application. In the non-aqueous solvent volume ratio of 100%, the volume ratio is usually 1% or more, preferably 2% or more, more preferably 3% or more. Moreover, the volume ratio is usually 30% or less, preferably 25% or less, and more preferably 20% or less. When two or more ether compounds are used in combination, the total amount of ether compounds only needs to be in the above range. When the addition amount of ether compounds is within the above preferred range, it is easy to ensure the improvement effects of ionic conductivity brought by the increase of lithium ion dissociation degree and the decrease of viscosity of chain ether. In addition, when the negative electrode active material is a carbon material, the co-intercalation reaction of the chain ether and lithium ions can be suppressed, so that the input-output characteristics and the charge-discharge

rate characteristics can be within an appropriate range.

In some embodiments, specifically, the nitrile solvent may be but not limited to one or more of acetonitrile, glutaronitrile and malononitrile.

In some embodiments, the carbonate solvent includes cyclic carbonate or chain carbonate, and the cyclic carbonate may specifically but not exclusively be one or more of ethylene carbonate (EC), propylene carbonate (PC), γ-butyrolactone(GBL) and butylene carbonate (BC). The chain carbonate may specifically but not exclusively be one or more of dimethyl carbonate (DMC), ethyl methyl carbonate (EMC), diethyl carbonate (DEC) and dipropyl carbonate (DPC). The content of cyclic carbonate is not particularly limited, which is within the range of not significantly damaging the effect of the high-voltage lithium ion battery of the present application. However, in the case where one is used alone, the minimal content is usually 3% by volume or more, preferably 5% by volume or more, relative to the total amount of the solvent in the non-aqueous electrolyte. With this range, the decrease of conductivity caused by the decrease of the dielectric constant of the non-aqueous electrolyte can be avoided, so the high-current discharge characteristics, the stability with respect to the negative electrode and the cycle characteristics of the non-aqueous electrolyte battery can easily reach a good range. In addition, the maximum content is usually 90% or less by volume, preferably 85% or less by volume, and more preferably 80% or less by volume. With this range, the oxidation/reduction resistance of the non-aqueous electrolyte can be improved, thus contributing to the improvement of the stability during high-temperature storage. The content of the chain carbonate is not particularly limited, but it is usually 15% or more by volume, preferably 20% or more by volume, and more preferably 25% or more by volume, relative to the total amount of the solvent in the non-aqueous electrolyte. In addition, the volume ratio is usually 90% or less, preferably 85% or less, and more preferably 80% or less. By setting the content of the chain carbonate in the above range, the viscosity of the non-aqueous electrolyte can be easily kept with an appropriate range, and the decrease of ionic conductivity can be suppressed, thus contributing to a good range of the output characteristics of the non-aqueous electrolyte battery. When two or more kinds of chain carbonates are used in combination, the total amount of the chain carbonate only needs to be in the above range.

In some embodiments, it is also preferable to use chain carbonates with fluorine atoms (hereinafter referred to as "fluorinated chain carbonates"). The number of fluorine atoms in the fluorinated chain carbonate is not particularly limited as long as it is 1 or more, but it is usually 6 or less, preferably 4 or less. When the fluorinated chain carbonate has multiple fluorine atoms, these fluorine atoms can be bonded to the same carbon or to different carbons. Examples of the fluorinated chain carbonates include fluorinated dimethyl carbonate derivatives, fluorinated ethyl methyl carbonate derivatives and fluorinated diethyl carbonate derivatives.

Carboxylic acid solvent includes cyclic carboxylic ester and/or chain carbonic ester. Examples of cyclic carboxylic ester include one or more of γ-butyrolactone, γ-valerolactone and δ-valerolactone. Examples of chain carbonic ester include one or more of methyl acetate (MA), ethyl acetate (EA), n-propyl acetate (EP), butyl acetate, propyl propionate (PP) and butyl propionate.

In some embodiments, sulfone solvent includes cyclic sulfones and chain sulfones, but preferably, in the case of cyclic sulfones, it is usually a compound with 3-6 carbon atoms, preferably 3-5 carbon atoms; and in the case of chain sulfones, it is usually a compound with 2-6 carbon atoms, preferably 2-5 carbon atoms. The addition amount of the sulfone solvent is not particularly limited, which is within the range of not significantly damaging the effect of the high-voltage lithium ion battery of the present application. Compared with the total amount of solvent in non-aqueous electrolyte, the volume ratio is usually 0.3% or more, preferably 0.5% or more, more preferably 1% or more. Moreover, the volume ratio is usually 40% or less, preferably 35% or less, and more preferably 30% or less. When two or more kinds of sulfone solvent are used in combination, the total amount of the sulfone solvents only needs to meet the above range. When the addition amount of sulfone solvent is within the above range, the electrolyte with excellent high-temperature storage stability is easily to be obtained.

In a preferred embodiment, the solvent is a mixture of cyclic carbonic ester and chain carbonic ester.

In some embodiments, the secondary battery further includes a separator between the positive electrode and the negative electrode.

The separator may be a conventional separator, a polymer membrane, a nonwoven fabric, etc., including but not limited to single-layer PP (polypropylene), single-layer PE (polyethylene), double-layer PP/PE, double-layer PP/PP and triple-layer PP/PE/PP membranes.

The present application will be further illustrated with the following embodiments.

The compounds involved in the following embodiments and comparative examples are shown in the following table:

| | | | |
|---|---|---|---|
| Compound 1 | 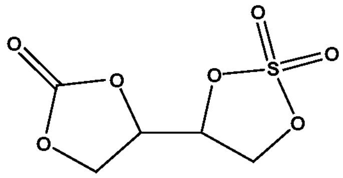 | Compound 3 | 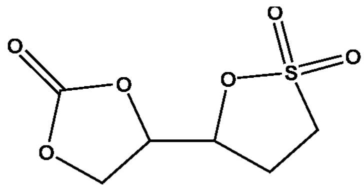 |
| Compound 4 | 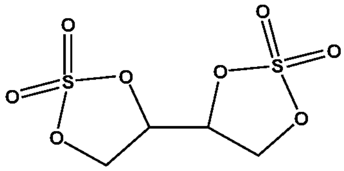 | Compound 7 | 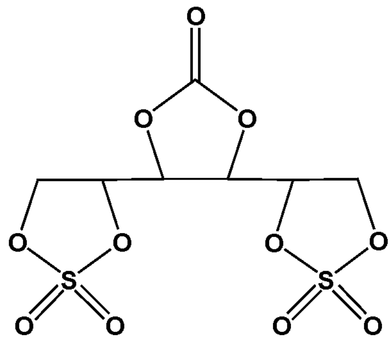 |
| Compound 8 | 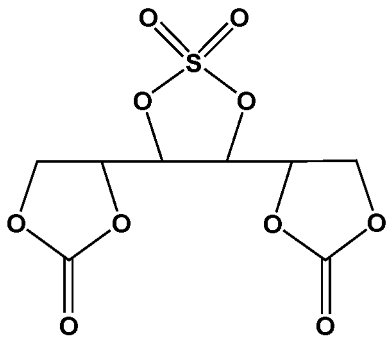 | | |

Table 1 Parameter Design of Embodiments and Comparative Examples

| Group | Mass percentage of the non-aqueous electrolyte to the negative electrode material layer (m%) | Compound represented by structural formula 1 in the electrolyte | Percentage mass content of the compound represented by structural formula 1 in the non-aqueous electrolyte (n%) | Supplemental additives and mass addition amount in the electrolyte | Compacted density of the negative electrode material layer (r, $g/cm^3$) | Percentage mass content of silicon in the negative electrode material layer (S%) | $\frac{m*n*r}{S}$ |
|---|---|---|---|---|---|---|---|
| Embodiment 1 | 55 | Compound 1 | 0.5 | - | 1.6 | 5 | 8.80 |
| Embodiment 2 | 55 | Compound 1 | 0.5 | - | 1.6 | 10 | 4.40 |
| Embodiment 3 | 55 | Compound 1 | 0.5 | - | 1.6 | 15 | 2.93 |
| Embodiment 4 | 55 | Compound 1 | 0.5 | - | 1.6 | 20 | 2.20 |
| Embodiment 5 | 55 | Compound 1 | 0.5 | - | 1.6 | 30 | 1.47 |
| Embodiment 6 | 55 | Compound 1 | 0.5 | - | 1.4 | 10 | 3.85 |
| Embodiment 7 | 55 | Compound 1 | 0.05 | - | 1.4 | 10 | 0.39 |
| Embodiment 8 | 55 | Compound 1 | 0.1 | - | 1.6 | 10 | 0.88 |
| Embodiment 9 | 55 | Compound 1 | 1.0 | - | 1.4 | 10 | 7.70 |
| Embodiment 10 | 55 | Compound 1 | 2.0 | - | 1.6 | 10 | 17.60 |
| Embodiment 11 | 55 | Compound 1 | 0.5 | - | 1.8 | 10 | 4.95 |
| Embodiment 12 | 55 | Compound 1 | 0.5 | - | 1.3 | 5 | 7.15 |
| Embodiment 13 | 50 | Compound 1 | 0.5 | - | 1.6 | 10 | 4.00 |

(continued)

| Group | Mass percentage of the non-aqueous electrolyte to the negative electrode material layer (m%) | Compound represented by structural formula 1 in the electrolyte | Percentage mass content of the compound represented by structural formula 1 in the non-aqueous electrolyte (n%) | Supplemental additives and mass addition amount in the electrolyte | Compacted density of the negative electrode material layer (r, g/cm$^3$) | Percentage mass content of silicon in the negative electrode material layer (S%) | $\frac{m*n*r}{S}$ |
|---|---|---|---|---|---|---|---|
| Embodiment 14 | 60 | Compound 1 | 0.5 | - | 1.6 | 10 | 4.80 |
| Embodiment 15 | 40 | Compound 1 | 0.5 | - | 1.6 | 10 | 3.20 |
| Embodiment 16 | 40 | Compound 1 | 1.0 | - | 1.5 | 30 | 2.00 |
| Embodiment 17 | 65 | Compound 1 | 0.5 | - | 1.6 | 10 | 5.20 |
| Embodiment 18 | 65 | Compound 1 | 2.0 | - | 1.8 | 10 | 23.40 |
| Embodiment 19 | 50 | Compound 1 | 0.1 | - | 1.3 | 30 | 0.22 |
| Embodiment 20 | 50 | Compound 1 | 1.0 | - | 1.3 | 30 | 2.17 |
| Embodiment 21 | 50 | Compound 1 | 0.5 | - | 1.8 | 10 | 4.50 |
| Embodiment 22 | 50 | Compound 1 | 0.5 | - | 1.4 | 10 | 3.50 |
| Embodiment 23 | 60 | Compound 1 | 1.8 | - | 1.8 | 5 | 38.88 |
| Embodiment 24 | 45 | Compound 1 | 1.0 | - | 1.5 | 20 | 3.38 |
| Embodiment 25 | 45 | Compound 1 | 1.0 | - | 1.8 | 5 | 16.20 |
| Embodiment 26 | 45 | Compound 1 | 0.5 | - | 1.6 | 20 | 1.80 |

(continued)

| Group | Mass percentage of the non-aqueous electrolyte to the negative electrode material layer (m%) | Compound represented by structural formula 1 in the electrolyte | Percentage mass content of the compound represented by structural formula 1 in the non-aqueous electrolyte (n%) | Supplemental additives and mass addition amount in the electrolyte | Compacted density of the negative electrode material layer (r, g/cm$^3$) | Percentage mass content of silicon in the negative electrode material layer (S%) | $\frac{m*n*r}{S}$ |
|---|---|---|---|---|---|---|---|
| Embodiment 27 | 70 | Compound 1 | 0.5 | - | 1.6 | 10 | 5.60 |
| Embodiment 28 | 80 | Compound 1 | 0.5 | - | 1.6 | 10 | 6.40 |
| Embodiment 29 | 90 | Compound 1 | 0.5 | - | 1.6 | 10 | 7.20 |
| Embodiment 30 | 55 | Compound 3 | 0.5 | - | 1.6 | 10 | 4.40 |
| Embodiment 31 | 55 | Compound 3 | 0.5 | - | 1.6 | 20 | 2.20 |
| Embodiment 32 | 55 | Compound 4 | 0.5 | - | 1.6 | 10 | 4.40 |
| Embodiment 33 | 55 | Compound 4 | 0.5 | - | 1.6 | 20 | 2.20 |
| Embodiment 34 | 55 | Compound 7 | 0.5 | - | 1.6 | 10 | 4.40 |
| Embodiment 35 | 55 | Compound 8 | 0.5 | - | 1.6 | 10 | 4.40 |
| Embodiment 36 | 55 | Compound 1 | 0.5 | PS 1% | 1.6 | 10 | 4.40 |
| Embodiment 37 | 55 | Compound 1 | 0.5 | DTD 1% | 1.6 | 10 | 4.40 |
| Embodiment 38 | 55 | Compound 1 | 0.5 | Tris (trimethylsilane) borate 1% | 1.6 | 10 | 4.40 |

(continued)

| Group | Mass percentage of the non-aqueous electrolyte to the negative electrode material layer (m%) | Compound represented by structural formula 1 in the electrolyte | Percentage mass content of the compound represented by structural formula 1 in the non-aqueous electrolyte (n%) | Supplemental additives and mass addition amount in the electrolyte | Compacted density of the negative electrode material layer (r, $g/cm^3$) | Percentage mass content of silicon in the negative electrode material layer (S%) | $\frac{m*n*r}{S}$ |
|---|---|---|---|---|---|---|---|
| Embodiment 39 | 55 | Compound 1 | 0.5 | Tripropargyl phosphate 0.5% | 1.6 | 10 | 4.40 |
| Embodiment 40 | 55 | Compound 1 | 0.5 | Butanedinitrile 1% | 1.6 | 10 | 4.40 |
| Comparative Example 1 | 55 | Compound 1 | - | - | 1.6 | 10 | - |
| Comparative Example 2 | 30 | Compound 1 | 0.5 | - | 1.6 | 10 | 2.40 |
| Comparative Example 3 | 90 | Compound 1 | 1.0 | - | 1.8 | 5 | 32.40 |
| Comparative Example 4 | 55 | Compound 1 | 0.02 | - | 1.6 | 5 | 0.35 |
| Comparative Example 5 | 55 | Compound 1 | 3.0 | - | 1.6 | 10 | 26.40 |
| Comparative Example 6 | 55 | Compound 1 | 0.5 | - | 2.0 | 10 | 5.50 |
| Comparative Example 7 | 55 | Compound 1 | 0.5 | - | 1.6 | 40 | 1.10 |
| Comparative Example 8 | 45 | Compound 1 | 0.05 | - | 1.4 | 30 | 0.11 |
| Comparative Example 9 | 40 | Compound 1 | 0.1 | - | 1.4 | 30 | 0.19 |
| Comparative Example 10 | 60 | Compound 1 | 2.0 | - | 1.8 | 5 | 43.20 |

Embodiment 1

This embodiment is used to illustrate the secondary battery and preparation method disclosed by the present application, including the following steps.

1) Preparation of electrolyte

Mix ethylene carbonate (EC), fluoroethylene carbonate (FEC), diethyl carbonate (DEC) and ethyl methyl carbonate (EMC) according to the mass ratio of EC: FEC: DEC: EMC = 20: 10: 30: 40, then add lithium hexafluorophosphate ($LiPF_6$) until the molar concentration is 1 mol/L, and then add additives according to Table 1. The content of additive is calculated as the percentage of the total mass of the electrolyte.

2) Preparation of positive electrode plate

Mix the positive electrode active material $LiNi_{0.8}Co_{0.1}Mn_{0.1}O_2$, conductive carbon black Super-P and binder polyvinylidene fluoride (PVDF) according to the mass ratio of 97:1.5:1.5, and then they are dispersed in N-methyl-2-pyrrolidone (NMP) to obtain a positive electrode slurry. Uniformly coat the slurry on both sides of aluminum foil, after drying, calendering and vacuum drying, weld aluminum lead wires with ultrasonic welding machine to obtain a positive electrode plate, the thickness of plate is 120-150 μm.

3) Preparation of negative electrode plate

Mix the negative electrode active material SiO-C, conductive carbon black Super-P, binder styrene-butadiene rubber (SBR) and carboxymethyl cellulose (CMC) according to the mass ratio of 94:1.5:3:1.5, and then they are dispersed in deionized water to obtain a negative electrode slurry. Coat the slurry on both sides of copper foil, after drying, calendering and vacuum drying, weld nickel lead wires with ultrasonic welding machine to obtain a negative electrode plate, the thickness of plate is 120-150 μm. The silicon content and compacted density of negative electrode are shown in Table 1.

4) Preparation of lithium ion battery core

Place a three-layered separator with the thickness of 20μm between the positive electrode plate and negative electrode plate, wind the sandwich structure consisting of the positive electrode plate, negative electrode plate and the separator, flatten the wound body then put it into an aluminum foil packaging bag, and perform vacuum-baking at 75°C for 48h to obtain a battery core to be injected with liquid.

5) Injection and formation of battery core

Inject the electrolyte prepared above into the battery core in a glove box with water and oxygen contents below 20ppm and 50ppm respectively. The liquid injection amount is subject to the limit in Table 1. After vacuum packaging, let stand for 24h at 45 °C.

Then follow the steps below to carry out the formation: charging at 0.05C constant current for 180min, charging at 0.1C constant current for 180min, charging at 0.2C constant current for 120min, then aging at 45°C for 48h, vacuum sealing for the second time, then further charging to 4.2V at 0.2C constant current and discharging to 2.75V at 0.2C constant current.

Embodiments 2-40

Embodiments 2-40 are used to illustrate the disclosed battery and preparation method, including most of the steps in Embodiment 1, with the difference that:
the additive content of electrolyte and negative electrode material layer shown in Table 1 are adopted.

Comparative Examples 1-10

Comparative Examples 1-10 are used to illustrate the disclosed battery and preparation method, including most of the steps in Embodiment 1, with the difference that:
the additive content of electrolyte and negative electrode material layer shown in Table 1 are adopted.

Performance test

The lithium ion batteries prepared above were tested as follows.

The prepared lithium ion battery was charged to 4.2V at constant current and constant voltage, and then stored in an oven with constant temperature of 60°C. After 30 days of storage, the discharge capacity, volume and internal resistance were tested. The discharge capacity, volume and impedance before storage were recorded, and the discharge capacity, volume and impedance after 30 days of storage were recorded.

Calculate the capacity retention rate, impedance growth rate and gas expansion rate of high-temperature storage according to the following formulas.

$$\text{Capacity retention rate} = \text{discharge capacity after storage} / \text{capacity before storage} \times 100\%$$

$$\text{Impedance growth rate} = (\text{impedance after storage} - \text{impedance before storage}) / \text{impedance before storage} \times 100\%$$

$$\text{Gas expansion rate} = (\text{battery volume after storage} - \text{initial volume of battery}) / \text{initial volume of battery} \times 100\%.$$

(1) The test results obtained from Embodiments 1-29 and Comparative Examples 1-9 are shown in Table 2

Table 2

| Group | Initial impedance (mΩ) | Store at 60°C for 30 days | | |
|---|---|---|---|---|
| | | Capacity retention rate (%) | Impedance growth rate (%) | Gas expansion rate (%) |
| Embodiment 1 | 16.7 | 83.4 | 23.8 | 8.9 |
| Embodiment 2 | 17.8 | 87.6 | 23.5 | 11.2 |
| Embodiment 3 | 19.1 | 85.4 | 27.6 | 14.9 |
| Embodiment 4 | 20.0 | 81.8 | 28.9 | 16.4 |
| Embodiment 5 | 21.3 | 79.6 | 30.7 | 21.6 |
| Embodiment 6 | 17.5 | 83.4 | 30.1 | 26.1 |
| Embodiment 7 | 14.3 | 75.2 | 31.3 | 19.3 |
| Embodiment 8 | 15.2 | 82.4 | 26.7 | 15.6 |
| Embodiment 9 | 20.1 | 87 | 20.2 | 10.3 |
| Embodiment 10 | 23.6 | 88.4 | 19.7 | 9.6 |
| Embodiment 11 | 19.7 | 77.5 | 42.3 | 12.5 |
| Embodiment 12 | 17.3 | 80.1 | 35.3 | 33.2 |
| Embodiment 13 | 18.3 | 86.4 | 24.3 | 12.7 |
| Embodiment 14 | 18.6 | 85.2 | 25.1 | 13.9 |
| Embodiment 15 | 15.3 | 83.7 | 22.5 | 11 |
| Embodiment 16 | 20.6 | 80.6 | 27.1 | 22.2 |
| Embodiment 17 | 19.8 | 83.4 | 26.7 | 15.9 |
| Embodiment 18 | 24.7 | 72.1 | 21.4 | 10.3 |
| Embodiment 19 | 18.4 | 75.2 | 36.5 | 27.6 |
| Embodiment 20 | 20.4 | 82.9 | 22.4 | 17.9 |

(continued)

| Group | Initial impedance (mΩ) | Store at 60°C for 30 days | | |
|---|---|---|---|---|
| | | Capacity retention rate (%) | Impedance growth rate (%) | Gas expansion rate (%) |
| Embodiment 21 | 21.1 | 77.9 | 35.2 | 11.9 |
| Embodiment 22 | 21.6 | 76.8 | 30.6 | 12.4 |
| Embodiment 23 | 23.1 | 74.1 | 22.3 | 12.5 |
| Embodiment 24 | 21.6 | 81.4 | 26.8 | 20.9 |
| Embodiment 25 | 22.6 | 83 | 24.1 | 19.6 |
| Embodiment 26 | 19.4 | 80.6 | 24.3 | 18.8 |
| Embodiment 27 | 20.1 | 82.6 | 26.4 | 14.6 |
| Embodiment 28 | 21.6 | 82.1 | 25.1 | 13.5 |
| Embodiment 29 | 22.8 | 81.4 | 24.2 | 12.6 |
| Comparative Example 1 | 13.8 | 56.90 | 75.1 | 66.4 |
| Comparative Example 2 | 31.1 | 69.30 | 35.9 | 10.2 |
| Comparative Example 3 | 34.9 | 71.6 | 34.1 | 15.6 |
| Comparative Example 4 | 16.3 | 62.60 | 40.3 | 12.9 |
| Comparative Example 5 | 22.9 | 69.30 | 29.6 | 20.7 |
| Comparative Example 6 | 22.5 | 71.90 | 30.8 | 16.2 |
| Comparative Example 7 | 19.1 | 63.20 | 55.9 | 24.6 |
| Comparative Example 8 | 18.9 | 59.60 | 41.6 | 33.9 |
| Comparative Example 9 | 20.6 | 61.30 | 39.6 | 28.7 |
| Comparative Example 10 | 26.8 | 71.80 | 35.4 | 12.3 |

It can be seen from the test results in Table 2, in Embodiments 1-29, when the mass percentage (m) of the non-aqueous electrolyte to the negative electrode material layer, the percentage mass content (n) of the compound represented by structural formula 1 in the non-aqueous electrolyte, the compacted density (r) of the negative electrode material layer and the percentage mass content (S) of silicon in the negative electrode material layer satisfied the relational expression of $0.21 \leq \frac{m*n*r}{S} \leq 40$, and 40%≤m≤90%, 0.05%≤n≤2%, 1.2g/cm$^3$ ≤ r ≤ 1.8g/cm$^3$, 5% ≤ S ≤ 30%, the capacity retention rate of lithium ion battery in high-temperature environment could be effectively improved, the impedance growth rate and gas expansion rate could be reduced. In Embodiments 1-29, because of its low reduction potential, the compound represented by structural formula 1 could decompose on the surface of silicon-based negative electrode to form a passivation film rich in element S. Meanwhile, by adjusting the mass percentage of the of non-aqueous electrolyte to the negative electrode material layer and the compacted density of the negative electrode material layer, the negative electrode material layer could be fully infiltrated in the non-aqueous electrolyte, ensuring the full contact between the compound represented by structural formula 1 and silicon. The passivation film obtained by the

decomposition of the compound represented by structural formula 1 has the characteristics of compactness and high strength. The silicon of the silicon-based negative electrode and the S-containing passivation film obtained by the decomposition of the compound represented by structural formula 1 have a chemical bonding effect. The passivation film can limit the expansion volume of the silicon-based material in the process of charge-discharge expansion, thus avoiding charge-discharge splitting of the passivation film at high temperature, improving property stability of the passivation film, reducing resistance growth of the battery at high temperature, and reducing the gas expansion problem caused by the continuous decomposition of the non-aqueous electrolyte.

It can be seen from the test results of Comparative Examples 2-7 that even if the value of $\frac{m*n*r}{S}$ was in the range of 0.21-40, the mass percentage (m) of the non-aqueous electrolyte to the negative electrode material layer, when the percentage mass content (n) of the compound represented by structural formula 1 in the non-aqueous electrolyte, the compacted density (r) of the negative electrode material layer and the percentage mass content (S) of silicon in the negative electrode material layer did not satisfy the requirements, the lithium ion battery still couldn't obtain excellent high-temperature storage performance. And it can be seen from Comparative Example 8 and Comparative Example 9 that even if the mass percentage (m) of the non-aqueous electrolyte to the negative electrode material layer, the percentage mass content (n) of the compound represented by structural formula 1 in the non-aqueous electrolyte, the compacted density (r) of the negative electrode material layer and the percentage mass content (S) of silicon in the negative electrode material layer satisfied the requirements, when the value of $\frac{m*n*r}{S}$ was too small, the high-temperature storage performance of lithium ion battery still couldn't be improved. Therefore, it can be seen that the mass percentage (m) of the non-aqueous electrolyte to the negative electrode material layer, the percentage mass content (n) of the compound represented by structural formula 1 in the non-aqueous electrolyte, the compacted density (r) of the negative electrode material layer and the percentage mass content (S) of silicon in the negative electrode material layer have a strong correlation in improving the high-temperature storage performance of battery. When the mass percentage (m) of the non-aqueous electrolyte to the negative electrode material layer and the compacted density (r) of the negative electrode material layer couldn't cooperate with the percentage mass content (n) of the compound represented by structural formula 1 in the non-aqueous electrolyte and the percentage mass content (S) of silicon in the negative electrode material layer, the contact between the compound shown in the structural formula 1 and the surface of the silicon-based negative electrode would be affected, thus the quality of the passivation film formed by the compound shown in the structural formula 1 would be affected, and when the strength of the passivation film is insufficient, the silicon-based negative electrode is easily cracked in the process of volume changing. Furthermore, the non-aqueous electrolyte is decomposed again on the cracked surface, thus affecting the high-temperature stability of the non-aqueous electrolyte, causing serious gas generation of battery, increasing the thickness of the passivation film and improving the impedance of battery. Therefore, by limiting the value of $\frac{m*n*r}{S}$, the performance stability of lithium ion battery at high temperature could be promoted together, and the battery capacity could be prevented from being affected by the failure of negative electrode material or non-aqueous electrolyte.

It can be seen from the test results of Embodiments 1-5 and 7-10 that with the increase of silicon content in the negative active material, the reaction between the negative active material and non-aqueous electrolyte during high-temperature storage intensified, the retention rate of high-temperature storage capacity of lithium ion battery decreased, and the impedance growth rate and gas expansion rate increased, resulting in the deterioration of high-temperature storage performance. While with the increase of the content of the compound represented by structural formula 1, a passivation film was formed on the surface of the negative active material, which formed a good isolation effect on the silicon-based negative electrode, avoided the direct contact between the non-aqueous electrolyte and the silicon-based negative electrode, effectively reversed the high-temperature performance deterioration caused by the silicon-based negative electrode, and ensured the performance balance of the lithium ion battery.

It can be seen from the test results of Embodiments 1-15 that with the increase of the mass percentage (m) of the non-aqueous electrolyte to the negative electrolyte material layer, the content of non-aqueous electrolyte in the battery increased, which could promote the intercalation and deintercalation of lithium ions in the negative electrode material layer, and reduce the impedance of battery. Meanwhile, due to the increase of free non-aqueous electrolyte, it is easy to react with the silicon-based negative electrode and decompose at high temperature to generation gas, thus increasing gas expansion rate of the battery.

(2) The test results obtained from Embodiments 2, 30-35 are shown in Table 3

Table 3

| Group | Initial impedance (mΩ) | Store at 60°C for 30 days | | |
|---|---|---|---|---|
| | | Capacity retention rate (%) | Impedance growth rate (%) | Gas expansion rate (%) |
| Embodiment 2 | 17.8 | 87.6 | 23.5 | 11.2 |
| Embodiment 30 | 22.1 | 86.4 | 25.6 | 13.9 |
| Embodiment 31 | 23.0 | 84.8 | 27.9 | 15.4 |
| Embodiment 32 | 17.4 | 83.2 | 29.6 | 16.9 |
| Embodiment 33 | 14.0 | 82.4 | 29.2 | 17.4 |
| Embodiment 34 | 19.6 | 84.6 | 26.4 | 12.9 |
| Embodiment 35 | 20.4 | 83.7 | 27.9 | 14.8 |

From the test results in Table 3, it can be seen that in Embodiments 2, 30-35, when different compounds represented by structural formula 1 were used, the requirements of $0.21 \leq \frac{m*n*r}{S} \leq 40$ and values m, n, r and S could also be met. It shows that the common cyclic sulfate groups in different compounds represented by structural formula 1 play a decisive role in the formation of passivation film on the surface of silicon-based negative electrode, and the passivation film rich in element S produced by the decomposition has good bonding strength with the silicon-based negative electrode, which inhibits continuous reaction between the silicon-based negative electrode and non-aqueous electrolyte, thus realizing the universal improvement of high-temperature storage performance of batteries.

(3) The test results obtained from Embodiments 2, 36-40 are shown in Table 4

Table 4

| Group | Initial impedance (mΩ) | Store at 60°C for 30 days | | |
|---|---|---|---|---|
| | | Capacity retention rate (%) | Impedance growth rate (%) | Gas expansion rate (%) |
| Embodiment 2 | 17.8 | 87.6 | 23.5 | 11.2 |
| Embodiment 36 | 19.2 | 88.6 | 21.4 | 9.4 |
| Embodiment 37 | 18.4 | 90.1 | 19.7 | 9.1 |
| Embodiment 38 | 15.3 | 86.1 | 17.4 | 12.1 |
| Embodiment 39 | 34.6 | 91.2 | 20.8 | 8.4 |
| Embodiment 40 | 20.3 | 87.9 | 26.4 | 11.8 |

From the test results in Table 4, it can be seen that in Embodiments 2, 36-40, on the basis of the lithium ion battery system provided by the present application, PS, DTD, tris (trimethylsilane) borate, tripropargyl phosphate, butanedinitrile, etc. were added as supplemental additives, which could further improve the cycle performance of battery. It is speculated that the chain length of the product components obtained from the decomposition of small molecule cyclic S-containing compounds contained in PS and DTD is shorter than that of the decomposition products of the compounds represented by structural formula 1, which could fill the gap of the passivation film formed by the compound represented by structural formula 1, while tris (trimethylsilane) borate, tripropargyl phosphate and butanedinitrile also have low reduction potentials, and the elements silane, boron, phosphorus and nitrogen contained therein play a reinforcing role in the passivation film, so as to form a more stable passivation film structure in the negative electrode material layer and improve the high-temperature storage stability of battery.

The above descriptions are only preferred embodiments of the present application, not intended to limit the present application. Any modification, equivalent replacement and improvement within the spirit and principle of the present application shall be included in the protection scope of the present application.

## Claims

1. A secondary battery, comprising a positive electrode, a negative electrode with a negative electrode material layer, and a non-aqueous electrolyte, the negative electrode material layer comprises a negative electrode active material, and the negative electrode active material comprises a silicon-based material;

   the non-aqueous electrolyte comprises a solvent, an electrolyte salt and an additive, the additives comprises a compound represented by structural formula 1;

   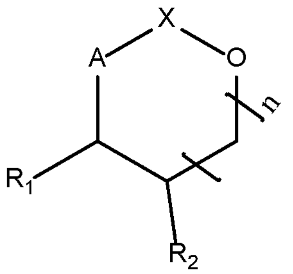

   Structural formula 1

   wherein n is 0 or 1, A is selected from C or O, X is selected from

   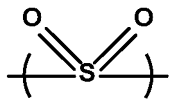

   or

   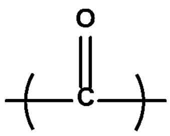,

   $R_1$ and $R_2$ are each independently selected from H,

   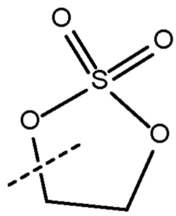, 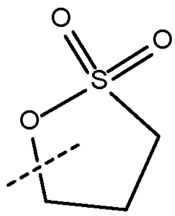,

   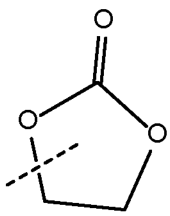, 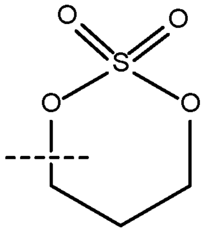 or 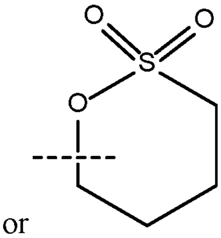,

   $R_1$ and $R_2$ are not selected from H at the same time, and X, $R_1$ and $R_2$ comprise at least one sulfur atom; the secondary battery meets the following requirements:

$$0.21 \leq \frac{m*n*r}{S} \leq 40;$$

and 40%^m^90%, 0.05%^n^2%, $1.2g/cm^3 \leq r \leq 1.8g/cm^3$, 5%≤S≤30%;

wherein, m is a mass percentage of the non-aqueous electrolyte to the negative electrode material layer, and the unit is %;

n is a percentage mass content of the compound represented by structural formula 1 in the non-aqueous electrolyte, and the unit is %;

r is a compacted density of the negative electrode material layer, and the unit is $g/cm^3$; and

S is a percentage mass content of silicon in the negative electrode material layer, and the unit is %.

**2.** The secondary battery of claim 1, wherein the secondary battery meets the following requirements:

$$0.4 \leq \frac{m*n*r}{S} \leq 15.$$

**3.** The secondary battery of claim 1, wherein the percentage mass content (m) of the negative electrode material layer in the non-aqueous electrolyte is 45%-80%.

**4.** The secondary battery of claim 1, wherein the percentage mass content (n) of the compound represented by structural formula 1 in the non-aqueous electrolyte is 0.05%-1%.

**5.** The secondary battery of claim 1, wherein the compacted density (r) of the negative electrode material layer is 1.4-1.7 $g/cm^3$.

**6.** The secondary battery of claim 1, wherein the percentage mass content (S) of silicon in the negative electrode material layer is 5%-20%.

**7.** The secondary battery of claim 1, wherein the compound represented by structural formula 1 is selected from one or more of the following compounds 1-18:

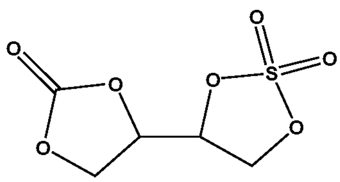

Compound 1

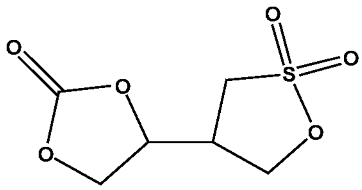

Compound 2

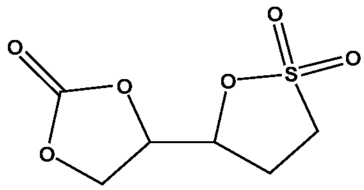

Compound 3

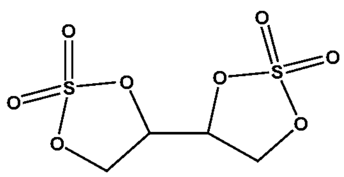

Compound 4

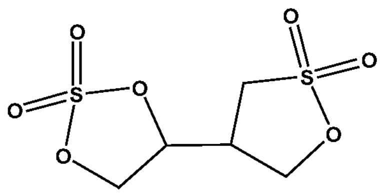

Compound 5

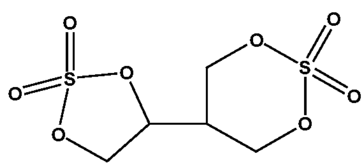

Compound 6

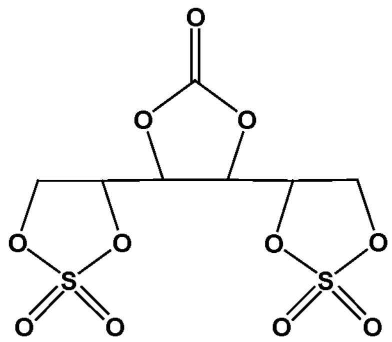

Compound 7

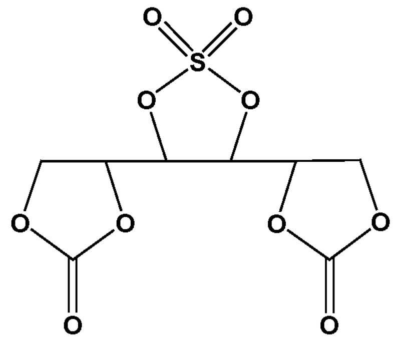

Compound 8

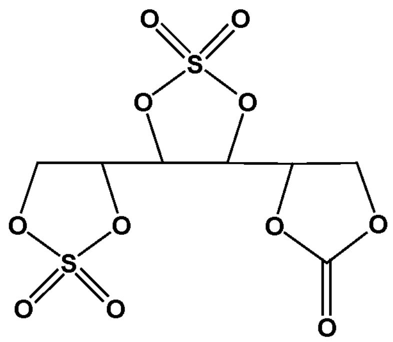

Compound 9

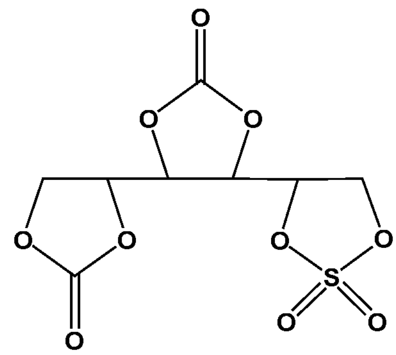

Compound 10

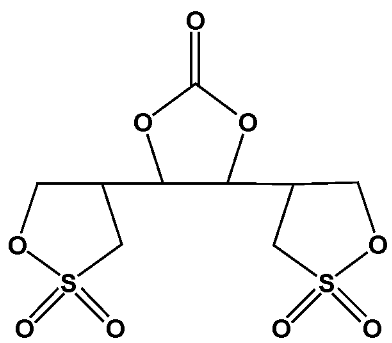

Compound 11

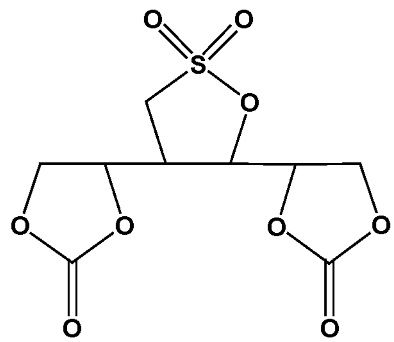

Compound 12

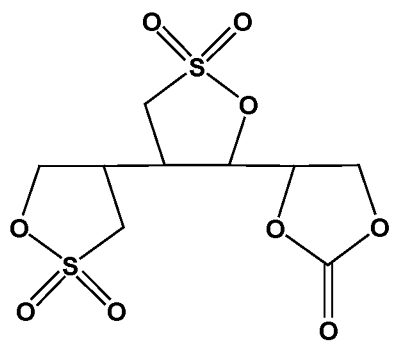

Compound 13

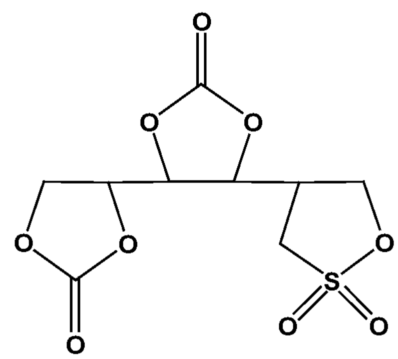

Compound 14

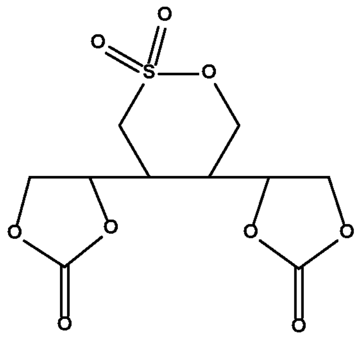

Compound 15

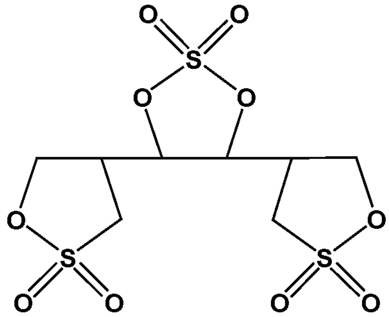

Compound 16

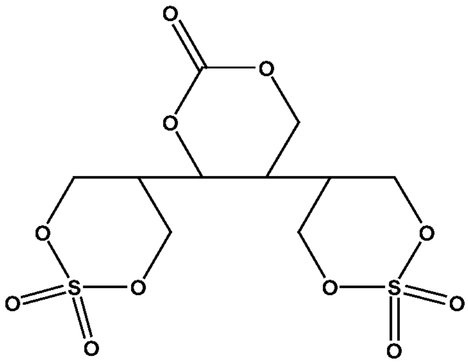

Compound 17

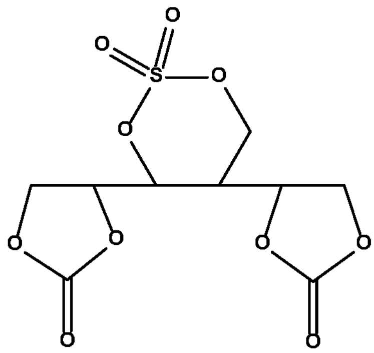

Compound 18

8. The secondary battery of claim 1, wherein the silicon-based material is selected from at least one of silicon material, oxide of silicon, silicon-carbon composite material and silicon alloy material.

9. The secondary battery of claim 1, wherein the non-aqueous electrolyte further comprises a supplemental additive, and the supplemental additive comprise at least one of cyclic sulfate compound, sultone compound, cyclic carbonate compound, phosphate compound, borate compound and nitrile compound.

10. The secondary battery of claim 9, wherein an addition amount of the supplemental additive is 0.01%-30% based on the total mass of the non-aqueous electrolyte being 100%.

11. The secondary battery of claim 9, wherein the cyclic sulfate compound is selected from at least one of ethylene sulfate, propylene sulfate or methyl ethylene sulfate;

the sultone compound is selected from at least one of methylene methyl disulfonate, 1,3-propane sultone, 1,4-butane sultone or 1,3- propene sultone;
the cyclic carbonate compound is selected from at least one of vinylene carbonate, vinylethylene carbonate, fluoroethylene carbonate or a compound represented by structural formula 2;

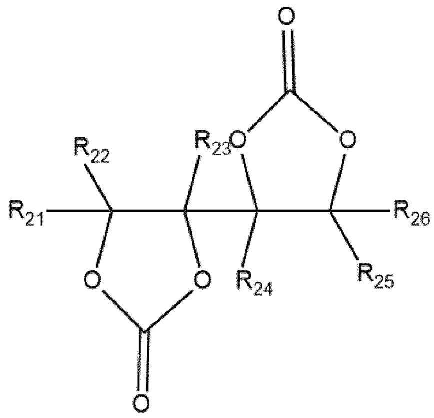

Structural formula 2

in structural formula 2, $R_{21}$, $R_{22}$, $R_{23}$, $R_{24}$, $R_{25}$ and $R_{26}$ are each independently selected from one of a hydrogen atom, a halogen atom and a C1-C5 group;
the phosphate compound is selected from at least one of tris (trimethylsilane) phosphate and a compound represented by structural formula 3:

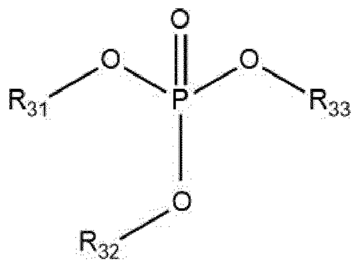

Structural formula 3

in structural formula 3, $R_{31}$, $R_{32}$ and $R_{33}$ are each independently selected from a C1-C5 saturated hydrocarbon group, an unsaturated hydrocarbon group, a halogenated hydrocarbon group and $-Si(C_mH_{2m+1})_3$, m is a natural number of 1-3, and at least one of $R_{31}$, $R_{32}$ and $R_{33}$ is an unsaturated hydrocarbon group;
the borate compound is selected from tris (trimethylsilane) borate; and
the nitrile compound is selected from one or more of butanedinitrile, glutaronitrile, ethylene glycol bis (propionitrile) ether, hexanetricarbonitrile, adiponitrile, pimelic dinitrile, hexamethylene dicyanide, azelaic dinitrile and sebaconitrile.

## INTERNATIONAL SEARCH REPORT

International application No.
**PCT/CN2022/132196**

**A. CLASSIFICATION OF SUBJECT MATTER**

H01M 10/0567(2010.01)i; H01M 10/0525(2010.01)i

According to International Patent Classification (IPC) or to both national classification and IPC

**B. FIELDS SEARCHED**

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

CNTXT, ENTXTC, CNKI, DWPI, ENTXT, STN: 电解质, 电解液, 质量, 重量, 负极, 阳极, 物质, 材料, 层, 百分比, electrolyte, mass, weight, negative pole, anode, substance, material, layer, percentage

**C. DOCUMENTS CONSIDERED TO BE RELEVANT**

| Category* | Citation of document, with indication, where appropriate, of the relevant passages | Relevant to claim No. |
|---|---|---|
| PX | CN 114497692 A (SHENZHEN CAPCHEM TECHNOLOGY CO., LTD.) 13 May 2022 (2022-05-13)<br>description, paragraphs [0004]-[0040] | 1-11 |
| Y | JP 2021101432 A (MITSUI CHEMICALS INC.) 08 July 2021 (2021-07-08)<br>description, paragraphs [0004]-[0156], and table 1 | 1-11 |
| Y | CN 112909319 A (NINGDE CONTEMPORARY AMPEREX TECHNOLOGY CO., LTD.) 04 June 2021 (2021-06-04)<br>description, paragraphs [0005]-[0126] | 1-11 |
| Y | CN 111763200 A (XIANGHE KUNLUN CHEMICALS CO., LTD.) 13 October 2020 (2020-10-13)<br>description, paragraphs [0003]-[0025] | 7 |
| Y | CN 111755753 A (XIANGHE KUNLUN CHEMICALS CO., LTD.) 09 October 2020 (2020-10-09)<br>description, paragraphs [0004]-[0026] | 7 |
| Y | CN 112470320 A (MITSUI CHEMICALS INC.) 09 March 2021 (2021-03-09)<br>description, paragraphs [0010]-[0413] | 1-11 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **05 January 2023** | **18 January 2023** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

International application No.
**PCT/CN2022/132196**

**C. DOCUMENTS CONSIDERED TO BE RELEVANT**

| Category* | Citation of document, with indication, where appropriate, of the relevant passages | Relevant to claim No. |
|---|---|---|
| A | JP 2015187926 A (MITSUI CHEMICALS INC.) 29 October 2015 (2015-10-29)<br>entire document | 1-11 |

Form PCT/ISA/210 (second sheet) (January 2015)

**INTERNATIONAL SEARCH REPORT**
**Information on patent family members**

International application No.
**PCT/CN2022/132196**

| Patent document cited in search report | | | Publication date (day/month/year) | Patent family member(s) | | | Publication date (day/month/year) |
|---|---|---|---|---|---|---|---|
| CN | 114497692 | A | 13 May 2022 | None | | | |
| JP | 2021101432 | A | 08 July 2021 | None | | | |
| CN | 112909319 | A | 04 June 2021 | CN | 112909319 | B | 22 April 2022 |
| CN | 111763200 | A | 13 October 2020 | None | | | |
| CN | 111755753 | A | 09 October 2020 | None | | | |
| CN | 112470320 | A | 09 March 2021 | WO | 2020022452 | A1 | 30 January 2020 |
| | | | | EP | 3828981 | A1 | 02 June 2021 |
| | | | | US | 2021296703 | A1 | 23 September 2021 |
| | | | | JP | 7034292 | B2 | 11 March 2022 |
| | | | | EP | 3828981 | A4 | 20 April 2022 |
| JP | 2015187926 | A | 29 October 2015 | None | | | |

Form PCT/ISA/210 (patent family annex) (January 2015)